(19) Europäisches Patentamt
European Patent Office
Office européen des brevets

(11) EP 3 543 303 A1

(12) # EUROPEAN PATENT APPLICATION
published in accordance with Art. 153(4) EPC

(43) Date of publication:
**25.09.2019 Bulletin 2019/39**

(21) Application number: **17870758.4**

(22) Date of filing: **26.10.2017**

(51) Int Cl.:
***C09D 183/02*** *(2006.01)* ***C09D 7/40*** *(2018.01)*

(86) International application number:
**PCT/JP2017/038819**

(87) International publication number:
**WO 2018/092543 (24.05.2018 Gazette 2018/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.11.2016 JP 2016222756**
**09.12.2016 JP 2016239842**

(71) Applicant: **Fujifilm Corporation**
**Minato-ku**
**Tokyo 106-8620 (JP)**

(72) Inventors:
- **KOITO, Naoki**
**Fujinomiya-shi**
**Shizuoka 418-8666 (JP)**
- **NAKAMICHI, Aki**
**Fujinomiya-shi**
**Shizuoka 418-8666 (JP)**
- **HAMA, Takeshi**
**Fujinomiya-shi**
**Shizuoka 418-8666 (JP)**
- **HATANAKA, Yusuke**
**Fujinomiya-shi**
**Shizuoka 418-8666 (JP)**

(74) Representative: **Hoffmann Eitle**
**Patent- und Rechtsanwälte PartmbB**
**Arabellastraße 30**
**81925 München (DE)**

(54) **LAMINATE, METHOD FOR PRODUCING SAME AND COMPOSITION FOR ANTI-FOG COATING**

(57) Provided are a laminate including a base material, and an anti-fogging layer provided on at least a part of the base material, in which the anti-fogging layer contains a siloxane binder, silica particles, and a water absorption organic polymer, a water absorption amount of the anti-fogging layer is in a range of 1.5 mg/cm$^2$ to 25.0 mg/cm$^2$, a water contact angle of a surface of the anti-fogging layer is in a range of 1° to 20°, and a film thickness of the anti-fogging layer is more than 1 $\mu$m and 10 $\mu$m or less; a method of producing the same; and an anti-fogging coating composition which is suitably used for formation of the anti-fogging layer.

FIG. 1

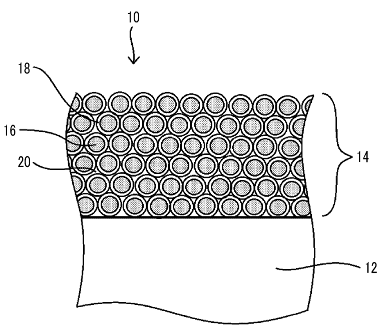




Printed by Jouve, 75001 PARIS (FR)

**Description**

BACKGROUND OF THE INVENTION

1. Field of the Invention

The present disclosure relates to a laminate, a method of producing the same, and an anti-fogging coating composition.

2. Description of the Related Art

Since devices and building materials provided indoors or outdoors and used for a long period of time are exposed to various environments, dust, dirt, gravel, or the like is gradually deposited thereon or the devices or building materials become wet with rain water when it is windy or raining. As the result, predetermined functions and performance may be impaired in some cases.

For example, in a vehicle lighting tool such as a head lamp of an automobile, high-humidity air enters the lighting chamber, the lens is cooled due to outside air or rainfall, and thus the moisture is condensed on the inner surface. Therefore, fogging occurs in some cases. As the result, the brightness of the vehicle lighting is lowered and the aesthetic appearance of the lens surface is impaired, and this may cause a user's discomfort.

In order to prevent such fogging of a lens, a method of coating a portion where fogging occurs with an anti-fogging coating material has been known. As a film (anti-fogging film) coated with an anti-fogging coating material, a hydrophilic type film obtained by forming the surface thereof to be superhydrophilic so that water droplets are changed to a water film or a water absorbing type film formed by using a water absorbing material so that water droplets are absorbed has been known.

As a technique related to the description above, an anti-fogging composition which is formed of a complex oxide obtained by performing a heat treatment on a sol solution formed by synthesizing a metal alkoxide and non-reactive oxide ultrafine particles in the presence of a strongly acidic catalyst and which has a composition in which a content of a metal oxide for forming a matrix is in a range of 30% to 60% by weight and a content of the non-reactive oxide ultrafine particles is in a range of 40% to 70% by weight is disclosed (see JP2001-254072A).

Further, a hydrophilic film which contains a siloxane binder and silica particles and whose surface is formed such that the relationship between a surface area difference ΔS and a surface roughness Ra satisfies Expression 1 has been suggested (see JP2016-164265A).

$$\Delta S \leq 0.5Ra \cdots \text{Expression 1}$$

In Expression 1, ΔS is a percentage acquired by Equation 2.

$$\Delta S = [(S_X - S_0)/S_0] \times 100 \cdots \text{Equation 2}$$

In Equation 2, So represents the projected area viewed from a direction perpendicular to the hydrophilic film and $S_x$ represents an actual surface area of the surface of the hydrophilic film in the projected area represented by $S_0$.

Further, a vehicle lighting tool which includes a light source in a housing, a lens that transmits light from the light source, and a vent hole for adjusting the atmospheric pressure variation in the housing, is formed of a crosslinked body formed by three-dimensionally crosslinking a water-soluble polymer in an inner surface of the lens, and is provided with an anti-fogging coating film having a water absorption amount of 1.5 to 25 mg/cm$^2$ has been suggested (see JP2009-054348A).

SUMMARY OF THE INVENTION

There has been a simple hydrophilic anti-fogging film or a simple water absorbing type anti-fogging film, but the configuration having both of these films is not currently known.

Further, the film thickness of a water absorbing type anti-fogging film of the related art can be increased, but the balance between improvement of stain resistance (securing anti-fogging properties for a long period of time) and suppression of water drip traces caused by swelling or dissolution of the anti-fogging film cannot be achieved in a case where only the film thickness is simply increased. Further, in a case where the film thickness of a hydrophilic anti-fogging

film generated from a sol gel reaction is intended to be only increased, the adhesiveness between the base material and the film is degraded or cracking occurs in the film. Accordingly, the anti-fogging properties are unlikely to be ensured for a long period of time (see NEW Glass, 98, Vol. 25, No. 3, pp. 40 to 45 (2010)).

In addition, the balance between improvement of the stain resistance and suppression of water drip traces cannot be achieved even in the inventions described in JP2001-254072A, JP2016-164265A, and JP2009-054348A.

An object of an embodiment of the present invention is to provide a laminate provided with an anti-fogging layer whose surface has excellent stain resistance and water drip trace suppressibility and a method of producing the same.

Further, another object of an embodiment of the present invention is to provide an anti-fogging coating composition which enables formation of an anti-fogging layer having excellent stain resistance and water drip trace suppressibility.

The means for solving the above-described problems includes the following aspects.

<1> A laminate comprising: a base material; and an anti-fogging layer provided on at least a part of the base material, in which the anti-fogging layer contains a siloxane binder, silica particles, and a water absorption organic polymer, a water absorption amount of the anti-fogging layer is in a range of 1.5 mg/cm$^2$ to 25.0 mg/cm, a water contact angle of a surface of the anti-fogging layer is in a range of 1° to 20°, and a film thickness of the anti-fogging layer is more than 1 μm and 10 μm or less.

<2> The laminate according to <1>, in which, in a case where a solid mass of the water absorption organic polymer in the anti-fogging layer is denoted as A and a solid mass of the silica particles in the anti-fogging layer is denoted as B, Relational Expression (A) is satisfied.

$$0.01 \leq A/B \leq 0.20 \text{ Relational Expression (A)}$$

<3> The laminate according to <1> or <2>, in which an average primary particle diameter of the silica particles is in a range of 10 nm to 20 nm.

<4> The laminate according to any one of <1> to <3>, in which the silica particles are chain-like silica particles.

<5> The laminate according to any one of <1> to <4>, in which a content of the silica particles in the anti-fogging layer is in a range of 40% by mass to 70% by mass with respect to a total mass of the anti-fogging layer.

<6> The laminate according to any one of <1> to <5>, in which a solubility parameter value of the water absorption organic polymer is 25.0 MPa$^{1/2}$ or more.

<7> The laminate according to any one of <1> to <6>, in which the base material is a resin base material.

<8> The laminate according to <7>, in which the resin base material is an acrylic resin base material or a polycarbonate base material.

<9> An anti-fogging coating composition comprising: a hydrolyzate of a siloxane compound represented by Formula (1); silica particles; and a water absorption organic polymer, in which, in a case where a solid mass of the water absorption organic polymer is set as A, a solid mass of the silica particles is set as B, and a solid weight of the hydrolyzate of the siloxane compound is set as C', Relational Expression (A) and Relational Expression (B') are satisfied.

$$0.01 \leq A/B \leq 0.20 \text{ Relational Expression (A)}$$

$$0.15 \leq C'/B \leq 2.00 \text{ Relational Expression (B')}$$

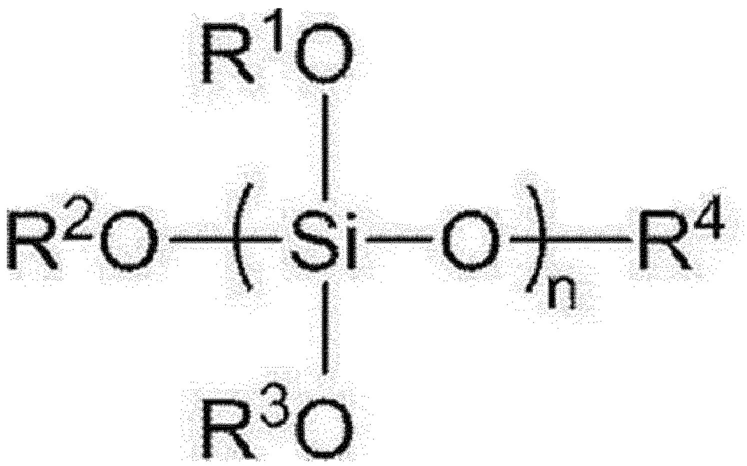

Formula (1)

In Formula (1), $R^1$, $R^2$, $R^3$, and $R^4$ each independently represent a monovalent organic group having 1 to 6 carbon atoms, and n represents an integer of 2 to 20.

<10> The anti-fogging coating composition according to <9>, in which an average primary particle diameter of the silica particles is in a range of 10 nm to 20 nm.

<11> The anti-fogging coating composition according to <9> or <10>, in which the silica particles are chain-like silica particles.

<12> The anti-fogging coating composition according to any one of <9> to <11>, in which a solubility parameter value of the water absorption organic polymer is 25.0 $MPa^{1/2}$ or more.

<13> The anti-fogging coating composition according to any one of <9> to <12>, further comprising: an aluminum chelate compound.

<14> The anti-fogging coating composition according to <13>, in which a content of the aluminum chelate compound is in a range of 5% by mass to 20% by mass with respect to a total solid content of the anti-fogging coating composition.

<15> The anti-fogging coating composition according to any one of <9> to <14>, further comprising: a ketone-based solvent.

<16> The anti-fogging coating composition according to <15>, in which a content of the ketone-based solvent is in a range of 1% by mass to 10% by mass with respect to a total mass of the anti-fogging coating composition.

<17> The anti-fogging coating composition according to any one of <9> to <16>, in which a content of the silica particles is in a range of 40% by mass to 70% by mass with respect to a total solid content of the anti-fogging coating composition.

<18> The anti-fogging coating composition according to any one of <9> to <17>, further comprising: water.

<19> The anti-fogging coating composition according to <18>, in which a content of water is in a range of 20% by mass to 60% by mass with respect to a total mass of the anti-fogging coating composition.

<20> A method of producing a laminate including: coating a base material with the anti-fogging coating composition according to any one of <9> to <19>, and drying the composition.

According to an embodiment of the present invention, it is possible to provide a laminate provided with an anti-fogging layer whose surface has excellent stain resistance and water drip trace suppressibility and a method of producing the same.

Further, according to another embodiment of the present invention, it is possible to provide an anti-fogging coating composition which enables formation of an anti-fogging layer having excellent stain resistance and water drip trace suppressibility.

BRIEF DESCRIPTION OF THE DRAWINGS

Fig. 1 is an enlarged cross-sectional view schematically illustrating an example of a laminate according to the present embodiment.

DESCRIPTION OF THE PREFERRED EMBODIMENTS

Hereinafter, the contents of the present disclosure will be described in detail. The description of constituent elements below is made based on representative embodiments of the present disclosure in some cases, but the present disclosure is not limited to such embodiments.

Further, in the specification of the present application, the numerical ranges shown using "to" indicate ranges including the numerical values described before and after "to" as the lower limit values and the upper limit values.
In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.
In the specification of the present application, in a case where substitution or unsubstitution is not noted in regard to the notation of a group (atomic group), the group includes not only a group that does not have a substituent but also a group having a substituent. For example, the concept of an "alkyl group" includes not only an alkyl group that does not have a substituent (unsubstituted alkyl group) but also an alkyl group having a substituent (substituted alkyl group).
In addition, in the present disclosure, "% by mass" has the same definition as that for "% by weight" and "part(s) by mass" has the same definition as that for "part(s) by weight".
Further, in the present disclosure, a combination of two or more preferred aspects is a more preferred aspect.
Further, the weight-average molecular weight (Mw) and the number average molecular weight (Mn) according to the present disclosure indicate a molecular weight obtained by performing detection using a gel permeation chromatography (GPC) analyzer, for which TSKgel GMHxL, TSKgel G4000HxL, and TSKgel G2000HxL (all trade names, manufactured by Tosoh Corporation) are used as columns, tetrahydrofuran (THF) as a solvent, and a differential refractometer and by performing conversion using polystyrene as a standard substance, unless otherwise specified.
In the present specification, a "solvent" indicates water, an organic solvent, or a mixed solvent of water and an organic solvent.
The term "solid content" in the present specification indicates a component excluding a solvent, and a liquid component other than a solvent such as a low-molecular-weight component is also included in the "solid content" in the present specification.
In the present specification, the concept of "(meth)acryl" includes both of acryl and methacryl.
Hereinafter, the present disclosure will be described in detail.

(Laminate)

A laminate according to the embodiment of the present disclosure includes a base material, and an anti-fogging layer provided on at least a part of the base material, in which the anti-fogging layer contains a siloxane binder, silica particles, and a water absorption organic polymer, a water absorption amount of the anti-fogging layer is in a range of 1.5 mg/cm$^2$ to 25.0 mg/cm$^2$, a water contact angle of a surface of the anti-fogging layer is in a range of 1° to 20°, and a film thickness of the anti-fogging layer is more than 1 $\mu$m and 10 $\mu$m or less.
As the result of intensive research conducted by the present inventors, it was found that a laminate provided with an anti-fogging layer whose surface has excellent stain resistance and water drip trace suppressibility can be provided by employing the above-described configuration.
The mechanism for obtaining such excellent effects is not clear, but can be assumed as follows.
The laminate according to the embodiment of the present disclosure is formed by adding a water absorption organic polymer typified by hydroxyethyl cellulose (HEC) to the anti-fogging layer in addition to the siloxane binder and the silica particles.
Further, it is considered that the siloxane binder, the silica particles, and the water absorption organic polymer form an anti-fogging layer having a stone wall shape with voids by setting the film thickness of the anti-fogging layer to more than 1 $\mu$m and 10 $\mu$m or less. As illustrated in Fig. 1 as an enlarged cross-sectional view schematically illustrating an example of the laminate according to the embodiment of the present disclosure, a laminate 10 according to the embodiment of the present disclosure includes a base material 12 and an anti-fogging layer 14, and it is assumed that each silica particle 16 on which a layer 18 containing a siloxane binder, a water absorption organic polymer, and the like is formed is deposited to form the anti-fogging layer 14 in a stone wall shape and voids 20 are formed between the silica particles 16, each of which is formed with the layer 18 containing a siloxane binder, a water absorption organic polymer, and the like.
Since the anti-fogging layer has appropriate voids therein, the water absorption organic polymer absorbs water at the time of the anti-fogging layer exhibiting the anti-fogging properties, and the voids play a role of compensating for an increase in volume even at the time of the anti-fogging layer being swollen. Therefore, swelling of the anti-fogging layer is suppressed and water drip traces are unlikely to be generated despite that the water absorption amount is in a range of 1.5 mg/cm$^2$ to 25.0 mg/cm$^2$ which is large. Further, even in a case where stain such as dust or dirt adheres to a part of the surface of the anti-fogging layer, a portion which does not have stain being adhered thereto exhibits water absorption effects. Therefore, it is considered that the surface of the anti-fogging layer showing anti-fogging persistence has excellent stain resistance because of the above-described reasons. Further, it is assumed that the appearance of

the anti-fogging layer at the time of exhibiting the anti-fogging properties is excellent based on the fact that the water contact angle of the surface thereof is in a range of 1° to 20°, which means that the hydrophilicity is exhibited.

<Anti-fogging layer>

The anti-fogging layer in the present disclosure contains a siloxane binder, silica particles, and a water absorption organic polymer.

Further, the water absorption amount of the anti-fogging layer is in a range of 1.5 mg/cm$^2$ to 25.0 mg/cm$^2$, the water contact angle of a surface of the anti-fogging layer is in a range of 1° to 20°, and the film thickness of the anti-fogging layer is more than 1 μm and 10 μm or less.

- Water absorption amount -

The water absorption amount of the anti-fogging layer is in a range of 1.5 mg/cm$^2$ to 25.0 mg/cm$^2$. From the viewpoints of the water drip trace suppressibility, the stain resistance, and the transparency, the water absorption amount thereof is preferably in a range of 1.5 mg/cm$^2$ to 15.0 mg/cm$^2$, more preferably in a range of 1.5 mg/cm$^2$ to 12.0 mg/cm$^2$, and particularly preferably in a range of 2.0 mg/cm$^2$ to 6.0 mg/cm$^2$.

It is considered that the water absorbency of the anti-fogging layer is improved and the stain resistance is exhibited by setting the water absorption amount thereof is set to 1.5 mg or more. It is considered that swelling or dissolution of the anti-fogging layer described below is suppressed and the water drip trace suppressibility is increased in a case where the water absorption amount is less than 25.0 mg.

The water absorption amount of the anti-fogging layer is measured according to the following method.

First, a laminate comprising an anti-fogging layer on a base material is prepared. The mass of the laminate is measured, and the obtained measured value is set as the "initial mass". Next, a hot water bath at 60°C is prepared, and the steam of the hot water bath is applied to only an area of 5 cm$^2$ in the anti-fogging layer of the laminate in a state in which the distance between the water surface of the hot water bath and the anti-fogging layer is maintained to 5 cm under conditions of an ambient temperature of 25°C and a relative humidity of 50%. After the steam is applied to the anti-fogging layer to the extent that water drip does not occur in a case where the laminate is tilted perpendicularly, the mass of the laminate is measured and the obtained measured value is set as the "mass after the test". The amount of increase in mass due to the test is calculated based on the initial mass and the mass after the test to acquire the mass per unit area to which the steam has been applied, and the mass is set as the water absorption amount (unit: mg/cm$^2$) of the anti-fogging layer.

- Water contact angle -

The water contact angle of the surface of the anti-fogging layer is in a range of 1° to 20°. From the viewpoints of the anti-fogging properties, the water drip trace suppressibility, the transparency, and the adhesiveness to the base material, the water contact angle thereof is preferably in a range of 1° to 15°, more preferably in a range of 1° to 13°, and particularly preferably in a range of 1° to 10°.

In a case where the water contact angle of the surface of the anti-fogging layer decreases, this means that the surface of the anti-fogging layer has excellent hydrophilicity.

It is considered that the hydrophilicity of the anti-fogging layer is improved by setting the water contact angle thereof to 20° or less so that an anti-fogging layer having excellent anti-fogging properties and appearance at the time of exhibiting the anti-fogging properties can be obtained.

The water contact angle of the surface of the anti-fogging layer is set as an arithmetic average value of the values obtained by dropping 1 μL of pure water on the surface of the anti-fogging layer and measuring the contact angle five times using a fully automatic contact angle meter (model number: DM-701, manufactured by Kyowa Interface Science, Inc.) as a measuring device according to the θ/2 method under conditions of an ambient temperature of 25°C and a relative humidity of 50%.

- Film thickness -

The film thickness of the anti-fogging layer is more than 1 μm and 10 μm or less. From the viewpoints of the water drip trace suppressibility, the stain resistance, and the transparency, the film thickness thereof is preferably in a range of 1.2 μm to 8 μm, more preferably in a range of 1.3 μm to 5 μm, and particularly preferably in a range of 1.5 μm to 4.0 μm.

It is considered that, since the accumulation amount of voids of the anti-fogging layer is increased and the water absorption amount is increased by setting the film thickness to 1 μm, the stain resistance of the anti-fogging layer

is improved. It is also considered that the accumulation amount of the organic polymer in the anti-fogging layer is suppressed and thus generation of water drip traces particularly due to dissolution of the organic polymer can be suppressed by setting the film thickness to less than 10 μm. Further, an anti-fogging layer having excellent transparency can also be obtained.

The method of measuring the film thickness of the anti-fogging layer is as follows.

The film thickness of the anti-fogging layer is obtained by observing the cross section of the laminate in a direction perpendicular to the anti-fogging layer using a transmission electron microscope, measuring ten random points of film thicknesses of the anti-fogging layer in the plane, and averaging the obtained ten values.

- Swelling ratio -

From the viewpoint of the water drip trace suppressibility, the swelling ratio of the anti-fogging layer is preferably 100% or less, more preferably 80% or less, and particularly preferably 50% or less. In a case where the swelling ratio decreases, this means that the water drip trace suppressibility is high.

The method of measuring the swelling ratio of the anti-fogging layer is as follows.

A film thickness $t_1$ of the anti-fogging layer of the laminate to be measured before immersion in water is measured under conditions of an ambient temperature of 24°C, a relative humidity of 50%, and a probe load of 0.5 g using a contact type film thickness meter (electronic micrometer K315C, manufactured by Anritsu Corporation). Thereafter, 3.0 ml of pure water is dropped on the surface of the laminate, and the laminate on which pure water has been dropped is allowed to stand. A film thickness $t_2$ after 30 seconds from the dropping of pure water is measured, and "$(t_2 - t_1)/t_1 \times 100(\%)$" is calculated. This measurement is performed on five specimens, and the arithmetic average value of the obtained values is set as the swelling ratio.

The anti-fogging layer has a structure in which the silica particles are deposited and it is preferable that the surface of the anti-fogging layer has an irregular structure due to the silica particles. Further, the irregular structure can be measured as the surface roughness Ra using an atomic force microscope (AFM), and the surface roughness Ra is preferably in a range of 1 nm to 100 nm and more preferably in a range of 3 nm to 50 nm.

The method of measuring the surface roughness Ra can be performed in conformity with JIS B0601:2001 using an atomic force microscope (AFM) (SPA-400, manufactured by Seiko Instruments Inc.).

Although it is difficult to observe the inside the anti-fogging layer, voids are assumed to be generated therein. In the present disclosure, the expression "the anti-fogging layer has voids therein" means that the void volume inside the anti-fogging layer is 5% or more. The void volume inside the anti-fogging layer is calculated from the ratio of the histogram value of the anti-fogging layer by acquiring a scanning electron microscope (SEM) image (a magnification of 50000 times, imaged at a resolution of "1 pixel = 2 nm") of the cross section of the laminate and performing a binarization treatment on the obtained SEM image of the cross section using image processing software (for example, ImageJ, manufactured by Wayne Rasband).

From the viewpoints of the stain resistance and the water drip trace suppressibility, the void volume inside the anti-fogging layer is preferably in a range of 10% to 50%.

- Water absorption organic polymer -

The anti-fogging layer contains a water absorption organic polymer.

The "water absorption organic polymer" in the present disclosure indicates an organic polymer having a solubility parameter value (SP value) of 19 $MPa^{1/2}$ or more.

From the viewpoints of the anti-fogging properties and the stain resistance, the SP value of the water absorption organic polymer is preferably 20 $MPa^{1/2}$ or more, more preferably 25 MPa1/2 or more, and particularly preferably 30 $MPa^{1/2}$ or more. Further, the upper limit thereof is preferably 40 $MPa^{1/2}$ or less.

The SP value in the present disclosure indicates the solubility parameter value measured according to the Hoy method. The Hoy method is described in POLYMER HANDBOOK FOURTH EDITION (John Wiley & Son, Inc.).

The weight-average molecular weight of the water absorption organic polymer is preferably 1000 or more. Further, the upper limit of the weight-average molecular weight is not particularly limited, but is preferably 2000000 or less.

Specific examples of the water absorption organic polymer include hydroxyethyl cellulose, hydroxypropyl cellulose, poly(meth)acrylamide, polyvinylpyrrolidone, polyvinyl acetate, polyvinyl alcohol, polyvinyl butyral, and polyethylene glycol.

Among these, from the viewpoints of the anti-fogging properties and the stain resistance, at least one organic polymer selected from the group consisting of hydroxyethyl cellulose, hydroxypropyl cellulose, poly(meth)acrylamide, polyvinylpyrrolidone, and polyethylene glycol is preferable, and at least one organic polymer selected from the group consisting of hydroxyethyl cellulose and polyvinylpyrrolidone is more preferable.

The anti-fogging layer may contain only one water absorption organic polymer and two or more water absorption

organic polymers.

The content of the water absorption organic polymer in the anti-fogging layer is preferably in a range of 0.1% by mass to 20% by mass, more preferably in a range of 0.5% by mass to 15% by mass, and still more preferably in a range of 1.0% by mass to 10% by mass with respect to the total mass of the anti-fogging layer. In a case where the content thereof is in the above-described range, an anti-fogging layer having excellent stain resistance and water drip trace suppressibility is obtained.

From the viewpoints of the anti-fogging properties, the stain resistance, the water drip trace suppressibility, the crack suppressibility, and the transparency, in a case where the solid mass of the water absorption organic polymer in the anti-fogging layer is denoted as A and the solid mass of the silica particles in the anti-fogging layer is denoted as B, it is preferable that Relational Expression (A) is satisfied, more preferable that Relational Expression (A1) is satisfied, and still more preferable that Relational Expression (A2) is satisfied.

$$0.01 \leq A/B \leq 0.20 \text{ Relational Expression (A)}$$

$$0.02 \leq A/B \leq 0.15 \text{ Relational Expression (A1)}$$

$$0.04 \leq A/B \leq 0.10 \text{ Relational Expression (A2)}$$

It is considered that, by setting A/B to 0.01 or more, the content ratio of the water absorption organic polymer in the anti-fogging layer is increased so that voids are generated in the anti-fogging layer, the water absorption amount of the laminate is increased, and the stain resistance of the anti-fogging layer is improved. It is also considered that, by setting A/B to 0.20 or less, generation of water drip traces due to swelling or dissolution of the anti-fogging layer can be suppressed in a state in which the hydrophilicity resulting from the silica particles in the anti-fogging layer is maintained.

- Siloxane binder -

The anti-fogging layer contains a siloxane binder.

It is preferable that the siloxane binder contains at least one compound obtained by causing a condensation reaction in a siloxane oligomer.

As the siloxane oligomer in the present disclosure, a partial hydrolysis condensate obtained by using one silane compound or a partial cohydrolysis condensate obtained by using two or more silane compounds can be used. Hereinafter, these compounds are also referred to as "partial (co)hydrolysis condensates".

Further, a silane compound is a compound containing a hydrolyzable silyl group and/or a silanol group. A silyl group becomes a silanol group through hydrolysis, and the silanol group undergoes dehydration condensation so that a siloxane bond is generated.

In this case, as the partial (co)hydrolysis condensate, a dimer to 100-mer of such a silane compound, preferably a dimer to 50-mer thereof, and more preferably a dimer to icosamer thereof can be suitably used, and a partial (co)hydro lysis condensate formed by using two or more silane compounds as a raw material can also be used. A dimer of a silane compound is a compound obtained by reacting 1 mol of water with 2 mol of a silane compound so that 2 mol of alcohol is desorbed to obtain a disiloxane unit.

Further, as such a partial (co)hydrolysis condensate, a commercially available compound as a silicone alkoxy oligomer may be used or a compound produced by reacting hydrolyzed water in an amount less than the equivalent to a hydrolyzable silane compound and removing by-products such as alcohol, hydrochloric acid, and the like according to a known method may be used. A silicone alkoxy oligomer is commercially available from Shin-Etsu Chemical Co., Ltd. and the like.

In the present disclosure, it is preferable that the siloxane oligomer contains an alkoxysilyl group at the molecular terminal. As the siloxane oligomer containing an alkoxysilyl group at the molecular terminal, a tetrafunctional siloxane oligomer containing four alkoxysilyl groups in a molecule and a trifunctional or difunctional siloxane oligomer can be used.

Among these siloxane oligomers, from the viewpoint of the reactivity of the condensation reaction, a tetrafunctional siloxane oligomer is preferable.

Among examples of tetrafunctional siloxane oligomers, it is preferable to contain a hydrolyzate of a siloxane compound (hereinafter, also referred to as a "specific siloxane compound") represented by Formula (1).

In a case where the anti-fogging layer is formed using a hydrolyzate of a siloxane compound represented by Formula (1), the anti-fogging layer is considered to contain a condensate of a hydrolyzate of a siloxane compound

represented by Formula (1) as a siloxane binder.

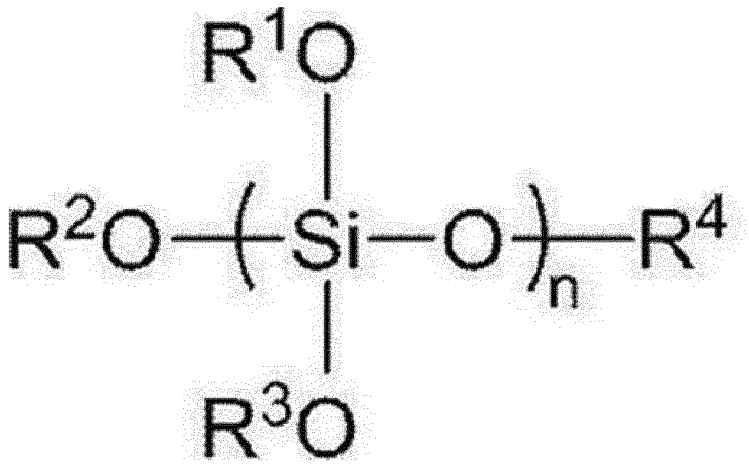

Formula (1)

In Formula (1), $R^1$, $R^2$, $R^3$, and $R^4$ each independently represent a monovalent organic group having 1 to 6 carbon atoms. n represents an integer of 2 to 20.

The organic group having 1 to 6 carbon atoms as $R^1$, $R^2$, $R^3$, and $R^4$ may be linear, branched, or cyclic.

Examples of the monovalent organic group include an alkyl group and an alkenyl group. Among the examples, an alkyl group is preferable.

Examples of the alkyl group in a case where $R^1$, $R^2$, $R^3$, and $R^4$ represent an alkyl group include a methyl group, an ethyl group, a propyl group, an isopropyl group, an n-butyl group, a tert-butyl group, an n-pentyl group, an n-hexyl group, and a cyclohexyl group.

In a case where $R^1$, $R^2$, $R^3$, and $R^4$ represent a monovalent organic group (preferably an alkyl group) having 1 to 6 carbon atoms, the hydrolyzability of the specific siloxane compound becomes excellent. Further, from the viewpoint that the hydrolyzability of the specific siloxane compound becomes excellent, it is more preferable that $R^1$, $R^2$, $R^3$, and $R^4$ each independently represent an alkyl group having 1 to 4 carbon atoms and still more preferable that $R^1$, $R^2$, $R^3$, and $R^4$ each independently represent an alkyl group having 1 or 2 carbon atoms.

In Formula (1), n represents an integer of 2 to 20. In a case where n represents 2 or more, the reactivity of the siloxane compound is easily controlled, and for example, a film whose surface has excellent hydrophilicity can be formed. In a case where n represents 20 or less, the viscosity of the anti-fogging coating composition does not become extremely high, and the handleability and uniform coatability are improved. n represents preferably 3 to 12 and more preferably 5 to 10.

Examples of the specific siloxane compound are listed in Table 1 based on $R^1$, $R^2$, $R^3$, $R^4$, and n in Formula (1). Here, the specific siloxane compound in the present disclosure is not limited to the following exemplary compounds listed in Table 1.

[Table 1]

| Specific siloxane compound | $R^1$ | $R^2$ | $R^3$ | $R^4$ | n |
|---|---|---|---|---|---|
| Compound 1 | Methyl group | Methyl group | Methyl group | Methyl group | 5 |
| Compound 2 | Methyl group | Methyl group | Methyl group | Methyl group | 10 |
| Compound 3 | Ethyl group | Ethyl group | Ethyl group | Ethyl group | 5 |
| Compound 4 | Ethyl group | Ethyl group | Ethyl group | Ethyl group | 10 |

At least a part of the specific siloxane compound is hydrolyzed in the coexistence of water. The hydrolyzate of the specific siloxane compound is a compound formed by reacting the specific siloxane compound with water so that at least some of $OR^1$, $OR^2$, $OR^3$, and $OR^4$ bonded to silicon atoms of the specific siloxane compound are substituted with hydroxy groups. The anti-fogging layer obtained from the anti-fogging coating composition that contains the hydrolyzate of the specific siloxane compound is assumed to have a surface with excellent hydrophilicity due to a hydroxy group serving as a hydrophilic group contained in the hydrolyzate of the specific siloxane compound.

During the hydrolysis reaction, it is not necessary for all terminal groups (in other words, $OR^1$, $OR^2$, $OR^3$, and $OR^4$) of the specific siloxane compound to react. However, from the viewpoint of improving the hydrophilicity of a film

obtained by applying and drying the anti-fogging coating composition, it is preferable that more terminal groups are hydrolyzed.

Commercially available products can be used as the specific siloxane compound.

Examples of the commercially available products of the specific siloxane compound include MKC (registered trademark, manufactured by Mitsubishi Chemical Corporation) silicate MS51 [$R^1$, $R^2$, $R^3$, and $R^4$: methyl group, average of n: 5], MKC (registered trademark, manufactured by Mitsubishi Chemical Corporation) silicate MS56 [$R^1$, $R^2$, $R^3$, and $R^4$: methyl group, average of n: 11], MKC (registered trademark, manufactured by Mitsubishi Chemical Corporation) silicate MS57 [$R^1$, $R^2$, $R^3$, and $R^4$: methyl group, average of n: 13], MKC (registered trademark, manufactured by Mitsubishi Chemical Corporation) silicate MS56S [$R^1$, $R^2$, $R^3$, and $R^4$: methyl group, average of n: 16], MKC (registered trademark, manufactured by Mitsubishi Chemical Corporation) methyl silicate 53A [$R^1$, $R^2$, $R^3$, and $R^4$: methyl group, average of n: 7], MKC (registered trademark, manufactured by Mitsubishi Chemical Corporation) ethyl silicate 40 [$R^1$, $R^2$, $R^3$, and $R^4$: ethyl group, average of n: 5], MKC (registered trademark, manufactured by Mitsubishi Chemical Corporation) ethyl silicate 48 [$R^1$, $R^2$, $R^3$, and $R^4$: ethyl group, average of n: 10], and MKC (registered trademark, manufactured by Mitsubishi Chemical Corporation) EMS485 [half of $R^1$, $R^2$, $R^3$, and $R^4$: methyl group and the rest: ethyl group, average of n: 10].

The anti-fogging layer may contain only one or two or more kinds of condensates of the hydrolyzate in the specific siloxane compound.

Further, the siloxane oligomer may be used alone or in combination of two or more kinds thereof.

The content of the siloxane binder in the anti-fogging layer is preferably 1% by mass or more, more preferably 5% by mass or more, and still more preferably 10% by mass or more with respect to the total mass of the anti-fogging layer.

The content of the siloxane binder in the anti-fogging layer is preferably 80% by mass or less, more preferably 60% by mass or less, and still more preferably 40% by mass or less with respect to the total mass of the anti-fogging layer.

In a case where the content of the siloxane binder in the anti-fogging layer is 1% by mass or more with respect to the total mass of the anti-fogging layer, an anti-fogging layer having excellent crack suppressibility, adhesiveness to the base material, and the stain resistance can be formed. Further, in a case where the content of the siloxane binder in the anti-fogging layer is in a range of 1% by mass to 80% by mass with respect to the total mass of the anti-fogging layer, since the water contact angle of the surface is suppressed to be low, an anti-fogging layer having excellent stain resistance can be formed.

- Silica particles -

The anti-fogging layer contains silica particles.

The silica particles contribute to improvement of the physical tolerance and the hydrophilicity of the anti-fogging layer. In other words, the silica particles function as a hard filler in the anti-fogging layer and the hydroxy group in the surface of each particle acts to improve the hydrophilicity of the anti-fogging layer. Examples of the silica particles include solid silica particles (silica particles that do not have hollow portions) and hollow silica particles. From the viewpoint of the physical tolerance, it is preferable to use solid silica particles.

Examples of the solid silica particles include fumed silica and colloidal silica.

The fumed silica can be obtained by reacting a compound having silicon atoms with oxygen and hydrogen in a gas phase. Examples of the silicon compound serving as a raw material include silicon halide (such as silicon chloride).

The colloidal silica can be synthesized according to a sol-gel method of hydrolyzing and condensing a raw material compound. Examples of the raw material compound of colloidal silica include alkoxysilicon (such as tetraethoxysilane) and a halogenated silane compound (such as diphenyldichlorosilane).

The shape of the silica particles is not particularly limited, and examples thereof include a spherical shape, a plate shape, a needle shape, a chain shape, and a necklace shape (bead shape). Here, the "spherical shape" includes a spheroid and an egg shape in addition to a perfectly spherical shape.

Among these, from the viewpoints of the transparency and the adhesiveness to the base material, a shape selected from the group consisting of a spherical shape, a chain shape, and a necklace shape is preferable, a chain shape or a necklace shape is more preferable, and a chain shape is particularly preferable.

The size of the silica particles is not particularly limited. For example, from the viewpoints of the water drip trace suppressibility, the stain resistance, the transparency, and the adhesiveness to the base material, the average primary particle diameter of the silica particles is preferably in a range of 1 nm to 100 nm, more preferably in a range of 5 nm to 50 nm, and particularly preferably in a range of 10 nm to 20 nm.

The average primary particle diameter of the silica particles is obtained by observing the silica particles using a transmission electron microscope, measuring the projected area of 300 or more silica particles from the obtained photomicrograph, and acquiring the circle equivalent diameter of the projected area, and the obtained circle equivalent diameter is set as the average primary particle diameter of the silica particles. The average primary particle diameter of the silica particles which are present in the anti-fogging layer is calculated by observing the cross section in a direction

perpendicular to the anti-fogging layer. Further, the average primary particle diameter of the silica particles in the anti-fogging coating composition described below is calculated by dropping 5 μL of the composition on slide glass, naturally drying the composition, and observing the surface of the glass.

As the silica particles, commercially available products can be used.

Examples of the commercially available products of the silica particles include SNOWTEX (registered trademark) Series [such as SNOWTEX (registered trademark) OUP] (manufactured by Nissan Chemical Corporation), AEROSIL (registered trademark) Series (manufactured by Evonik Industries AG), Nalco (registered trademark) Series [such as Nalco (registered trademark) 8699] (manufactured by Nalco Chemical Co., Ltd.), and QUARTRON PL Series (such as PL-1) (manufactured by Fuso Chemical Co., Ltd.).

The anti-fogging layer may contain only one or two or more kinds of silica particles. In a case where the anti-fogging layer contains two or more kinds of silica particles, silica particles having different shapes and average primary particle diameters may be used in combination.

In the anti-fogging layer, the dispersion state of silica particles is not particularly limited, but it is preferable that the silica particles are uniformly dispersed in the anti-fogging layer from the viewpoints of the anti-fogging properties, the water drip trace suppressibility, and the transparency.

The content of the silica particles in the anti-fogging layer is preferably in a range of 10% by mass to 90% by mass, more preferably in a range of 20% by mass to 70% by mass, and still more preferably in a range of 40% by mass to 65% by mass with respect to the total mass of the anti-fogging layer. In a case where the content thereof is in the above-described range, an anti-fogging layer having excellent hardness, scratch resistance, and impact resistance and having desired hydrophilicity can be formed.

Further, in a case where the solid mass of the silica particles in the anti-fogging layer is denoted as B and the solid mass of the siloxane binder in the anti-fogging layer is denoted as C, it is preferable that Relational Expression (B) is satisfied.

$$0.15 \leq C/B \leq 2.00 \text{ Relational Expression (B)}$$

By satisfying Relational Expression (B), an anti-fogging layer having a preferable film density is formed.

Further, from the viewpoints of the stain resistance, the water drip trace suppressibility, and the adhesiveness to the base material, in a case where the solid mass of the silica particles in the anti-fogging layer is denoted as B and the solid mass of the siloxane binder in the anti-fogging layer is denoted as C, it is preferable that Relational Expression (B1) is satisfied and more preferable that Relational Expression (B2) is satisfied.

$$0.15 \leq C/B \leq 1.50 \text{ Relational Expression (B1)}$$

$$0.20 \leq C/B \leq 1.30 \text{ Relational Expression (B2)}$$

It is considered that the amount of the siloxane binder which fixes the silica particles in the anti-fogging layer becomes preferable and generation of water drip traces due to swelling and dissolution of the anti-fogging layer can be suppressed in a case where C/B is 0.15 or more. It is also considered that voids are generated in the anti-fogging layer so that the moisture content which can be taken in is increased, and the anti-fogging properties and the stain resistance are improved in a case where C/B is 2.00 or less.

- Other components -

The anti-fogging layer may contain components other than the components described above, as necessary. Examples of other components include an adhesion assistant that contributes improvement of the adhesiveness to the base material, an antistatic agent, and other components used in the anti-fogging coating composition described below.

«Adhesion assistant»

The anti-fogging layer may further contain an adhesion assistant.

In the anti-fogging layer, the adhesion assistant contributes to improvement of the adhesiveness between the anti-fogging layer and the base material (particularly, a polycarbonate base material or a polymethyl methacrylate base material).

Further, the adhesion assistant in the present disclosure may function as the water absorption organic polymer.

Examples of the adhesion assistant include a film-forming component that does not have a siloxane structure in a molecule, such as a film-forming polymer compound. More specific examples thereof include compounds containing polar groups (for example, a hydroxyl group, a carboxy group, a phosphoric acid group, a sulfonic acid group, and an amino group) at the terminal, such as a urethane-based resin, a (meth)acrylic resin, a polyphosphate and a metaphosphate.

Among these, as the adhesion assistant, from the viewpoint of improving the adhesiveness between the anti-fogging layer and the base material, a compound containing at least one functional group, at the terminal thereof, selected from a hydroxyl group, a carboxy group, and a phosphoric acid group is preferable, at least one selected from the group consisting of a urethane-based resin, a (meth)acrylic resin, and a polyphosphate is more preferable, and at least one resin selected from the group consisting of a urethane-based resin and a (meth)acrylic resin is still more preferable.

The urethane-based resin is not particularly limited, and examples thereof include polyurethane having a soft segment and a hard segment structure formed of a polyol skeleton and a polyisocyanate skeleton.

As the urethane-based resin, commercially available products can be used.

Examples of the commercially available products of the urethane-based resin include TAKELAC (registered trademark) W Series, WS Series, and WD Series (all manufactured by Mitsui Chemicals, Inc.), PERMARIN (registered trademark) Series, UCOAT (registered trademark) Series, and UPRENE (registered trademark) Series (all manufactured by Sanyo Chemical Industries, Ltd.).

In the present specification, the "(meth)acrylic resin" indicates a polymer having at least one selected from the group consisting of a constitutional unit derived from acrylic acid, a constitutional unit derived from methacrylic acid, a constitutional unit derived from acrylic acid ester, and a constitutional unit derived from methacrylic acid ester.

Examples of the (meth)acrylic resin include a homopolymer (that is, polyacrylic acid) of acrylic acid, a homopolymer (that is, polymethacrylic acid) of methacrylic acid, and a copolymer having at least one monomer selected from the group consisting of acrylic acid, methacrylic acid, acrylic acid ester, and methacrylic acid ester.

Among these, polyacrylic acid is preferable as the (meth)acrylic resin. The weight-average molecular weight of the polyacrylic acid is preferably in a range of 25000 to 5000000, more preferably in a range of 50000 to 2000000, and still more preferably in a range of 150000 to 1000000.

The weight-average molecular weight of the polyacrylic acid can be measured by gel permeation chromatography (GPC).

The measurement using gel permeation chromatography (GPC) can be performed using HLC-8120GPC and SC-8020 (both manufactured by Tosoh Corporation) as a measuring device, two columns of TSKgel (registered trademark) Super HM-H (manufactured by Tosoh Corporation, 6.0 mmID $\times$ 15 cm), and tetrahydrofuran (THF) as an eluent. Further, the measurement is performed under conditions of a sample concentration of 0.5% by mass, a flow rate of 0.6 ml/min, a sample injection volume of 10 $\mu$L, and a measurement temperature of 40°C using a differential refractive index (RI) detector.

As the calibration curve, those prepared from 10 samples of "A-500", "F-1", "F-10", "F-80", "F-380", "A-2500", "F-4", "F-40", "F-128", and "F-700" which are "Standard Samples TSK standard, polystyrene" (manufactured by TOSOH CORPORATION).

Examples of the polyphosphate include sodium polyphosphate and potassium polyphosphate.

In a case where the anti-fogging layer further contains an adhesion assistant, the anti-fogging layer may contain one or two or more kinds of adhesion assistants.

In a case where the anti-fogging layer further contains an adhesion assistant, the content of the adhesion assistant is preferably in a range of 0.001% by mass to 5% by mass, more preferably in a range of 0.01% by mass to 1% by mass, and still more preferably in a range of 0.05% by mass to 0.5% by mass with respect to the total mass of the anti-fogging layer. In a case where the content thereof is in the above-described range, an anti-fogging layer having excellent adhesiveness to the base material tends to be formed.

<<Antistatic agent>>

It is preferable that the anti-fogging layer contains an antistatic agent.

In the anti-fogging layer, the antistatic agent is used for the purpose of imparting the antistatic property to the anti-fogging layer to suppress adhesion of contaminants thereto so that the stain resistance is improved.

The antistatic agent is not particularly limited and can be appropriately selected from compounds having an antistatic function. A compound exhibiting surface activity or a compound that does not exhibit surface activity may be used. Examples of the antistatic agent include ionic surfactants and metal oxide particles.

Here, the metal oxide particles do not include silica particles described above.

In a case where the anti-fogging layer is formed by, for example, performing coating, since the ionic surfactant has a property of easily segregating on the vicinity of the film surface, the effects can be expected to be achieved only

with a small amount of the ionic surfactant. Further, since a relatively large amount of metal oxide particles may be required to impart the antistatic property to the film, but the metal oxide particles are suitable in terms of improving the scratch resistance of the film because the metal oxide particles serve as an inorganic substance.

Examples of the ionic surfactant include anionic surfactants such as an alkyl sulfate [such as sodium dodecyl sulfate or sodium lauryl sulfate], an alkyl benzene sulfonate [sodium dodecylbenzene sulfonate or sodium laurylbenzene sulfonate], and an alkyl sulfosuccinate [such as sodium di(2-ethylhexyl)sulfosuccinate]; and cationic surfactants such as an alkyl trimethyl ammonium salt and a dialkyl dimethyl ammonium salt.

Examples of the metal oxide particles include tin oxide particles, antimony-doped tin oxide particles, tin-doped indium oxide particles, and zinc oxide particles.

The shape of the metal oxide particles is not particularly limited, and examples thereof include a spherical shape, a plate shape, and a needle shape.

In a case where the refractive index and the particle diameter are large, since loss due to extreme scattering of transmitted light may easily occur, the average primary particle diameter of the metal oxide particles is preferably 100 nm or less, more preferably 50 nm or less, and still more preferably 30 nm or less.

Similarly to the method of measuring the average primary particle diameter of the silica particles, the average primary particle diameter of the metal oxide particles is measured by observing the metal oxide particles using a transmission electron microscope, measuring the projected area of 300 or more metal oxide particles from the obtained photomicrograph, and acquiring the circle equivalent diameter of the projected area, and the obtained circle equivalent diameter is set as the average primary particle diameter of the metal oxide particles. The average primary particle diameter of the metal oxide particles which are present in the anti-fogging layer is calculated by observing the cross section in a direction perpendicular to the anti-fogging layer. Further, the average primary particle diameter of the metal oxide particles in the anti-fogging coating composition described below is calculated by dropping 5 $\mu$L of the composition on slide glass, naturally drying the composition, and observing the surface of the glass.

In a case where the anti-fogging layer contains an antistatic agent, the anti-fogging layer may contain only one or two or more kinds of antistatic agents.

In a case where the anti-fogging layer contains an ionic surfactant, the content of the ionic surfactant in the anti-fogging layer is preferably 5% by mass or less, more preferably 1% by mass or less, and still more preferably 0.5% by mass or less with respect to the total solid content of the anti-fogging coating composition.

Further, from the viewpoint of the effect for improving the stain resistance resulting from containing the ionic surfactant, the content of the ionic surfactant in the anti-fogging layer is preferably 0.01% by mass or more with respect to the total mass of the anti-fogging layer.

In a case where the content of the ionic surfactant in the anti-fogging layer is in a range of 0.01% by mass to 5% by mass with respect to the total mass of the anti-fogging layer, an anti-fogging layer having excellent antifouling property while suppressing aggregation of the silica particles can be formed.

In a case where the anti-fogging layer contains metal oxide particles as an antistatic agent, the content of the metal oxide particles in the anti-fogging layer is preferably 40% by mass or less, more preferably 20% by mass or less, and still more preferably 10% by mass or less with respect to the total mass of the anti-fogging layer.

From the viewpoint of the effect for improving the antifouling property of the film resulting from containing the metal oxide particles, the content of the metal oxide particles in the anti-fogging layer is preferably 1% by mass or more with respect to the total mass of the anti-fogging layer.

Further, in a case where the content of the metal oxide particles in the anti-fogging layer is in a range of 1% by mass to 40% by mass or less with respect to the total mass of the anti-fogging layer, the antistatic property can be effectively imparted to the anti-fogging layer without damaging the film forming property in a case where the anti-fogging layer is formed by performing coating.

<Base material>

The laminate according to the embodiment of the present disclosure contains a base material.

Further, the laminate according to the embodiment of the present disclosure has an anti-fogging layer provided on at least a part of the base material. The anti-fogging layer may be provided on at least a part or the entire surface of the base material. Further, the anti-fogging layer may or may not be in direct contact with the base material, but it is preferable that the anti-fogging layer is in direct contact with the base material because the laminate according to the embodiment of the present disclosure has excellent adhesiveness between the anti-fogging layer and the base material.

The material of the base material is not particularly limited and can be used by being appropriately selected from various materials such as glass, resins (in other words, plastics), metals, and ceramics. Further, as the material of the base material, a composite material formed of a plurality of materials can also be used. For example, the material of the base material may be a composite material which contains glass and a resin material and is compounded by mixing the glass and the resin material or a resin composite material in which a plurality of resin materials are kneaded

or bonded.

Further, a resin base material is suitably exemplified as the base material. For example, a resin base material has been frequently used for a protective material for a light of an automobile or a protective material for a monitoring camera.

In a case where the material of the base material is a resin material, as the base material, an acrylic resin base material, a polycarbonate base material, or a polyethylene terephthalate base material is preferable from the viewpoint that a laminate having excellent durability against light and heat and having excellent adhesiveness while maintaining the transparency of the base material between the base material and the anti-fogging layer can be formed; an acrylic resin base material or a polycarbonate base material is more preferable from the viewpoint that a laminate having excellent adhesiveness can be formed; and a polycarbonate base material or a polymethyl methacrylate base material is particularly preferable.

The thickness or the shape of the base material is not particularly limited and appropriately set depending on the target to be employed.

Further, the surface of the base material may be subjected to a surface treatment as necessary. The surface treatment method is not particularly limited, and a known method can be used.

<Applications of laminate>

The laminate according to the embodiment of the present disclosure can be used for various applications. Specifically, the laminate can be suitably used for imparting a function of the anti-fogging property or the like to protective materials (so-called protective covers) for protecting monitoring cameras, illuminations, or sensor lighting tools; roofing materials of garages for vehicles such as automobiles or motorcycles; signs such as traffic signs; sound-insulating walls for installation along the shoulder of an expressway or for a railway; bodies for vehicles such as automobiles or motorcycles; and protective materials (such as lenses) of window glass, mirrors, or light of automobiles.

Among these, the laminate according to the embodiment of the present disclosure can be more suitably used for protective materials of automobile lights (such as head lights, tail lamps, door mirror, and winker lights) and protective materials of monitoring cameras.

An automobile typically comprises a light unit that includes a light and a lens for protecting the light. In a case where the temperature of any one surface of a transparent base material such as glass or plastic which is used in the light unit becomes lower than or equal to the dew point due to a difference in temperature and humidity between the inner surface and the outer surface with the base material interposed therebetween, or a sudden change in temperature and humidity occurs in the base material (in a case where boiling steam comes into contact with the base material or the base material is transferred to a high temperature and humidity environment from a low temperature portion), the moisture in the atmosphere adheres to the surface of the base material as water droplets, and thus the surface of the base material is condensed. As a result, so-called "fog" in which light scattering occurs due to the condensed water droplets occurs in some cases. In a case where such "fog" occurs in the headlight or rear light, the appearance is significantly impaired. Such fog also occurs in protective covers of monitoring cameras (in other words, housing-integrated monitoring cameras) provided with protective covers, and thus the visibility or the safety is significantly impaired in this case. In the laminate according to the embodiment of the present disclosure, the appearance, the function, and the performance of lights of automobiles and monitoring cameras are not impaired because the laminate has excellent transparency, and the excellent anti-fogging properties can be maintained for a long period of time because the laminate has excellent stain resistance and adhesiveness to the base material.

(Method of producing laminate)

A method of producing the laminate according to the embodiment of the present disclosure is not particularly limited as long as the laminate according to the embodiment of the present disclosure can be produced.

It is preferable that the method of producing the laminate according to the embodiment of the present disclosure is a method of coating the base material with the anti-fogging coating composition according to the embodiment of the present disclosure, described below, and drying the composition.

For example, the laminate according to the embodiment of the present disclosure can be suitably produced according to a method of applying the anti-fogging coating composition to the base material to form an anti-fogging layer.

The method of applying the anti-fogging coating composition to the base material is not particularly limited, and a coating method is preferably used. The coating method of coating the base material with the anti-fogging coating composition is not particularly limited, and known coating methods such as spray coating, brush coating, roller coating, bar coating, and dip coating (so-called immersion coating) can be employed. Among these, spray coating is preferable as the coating method in a case where three-dimensional structures having various surface shapes such as curved surfaces and irregularities are coated with the anti-fogging coating composition.

In a case where the base material is coated with the anti-fogging coating composition according to the spray coating, a method of setting the base material is not particularly limited. The base material can be coated with the anti-fogging coating composition by appropriately changing the orientation of the base material in a horizontal direction, a vertical direction, or the like with respect to the coating direction depending on the shape of the base material. In order to make the thickness of the coated film uniform, it is preferable that the base material is coated with the anti-fogging coating composition by disposing a spray nozzle at a position where the distance between the spray nozzle and the position becomes equal to the distance between the base material and the position or it is also preferable that the distance between the spray nozzle and the position and the distance between the base material and the position are set to be in a range of 10 mm to 1000 mm.

As the system of supplying the anti-fogging coating composition to a coating device, any system selected from a pumping type system, a suction type system, or a gravity type system can be used.

The nozzle opening diameter of the spray nozzle is preferably in a range of 0.1 mmϕ to 1.8 mmϕ, and the air pressure is preferably in a range of 0.02 MPa to 0.60 MPa. By coating the base material with the anti-fogging coating composition under such conditions, the thickness of the coated film can be set to be uniform. In order to form a suitable coated film by carrying out spray coating, it is necessary to adjust the amount of air, the amount of the anti-fogging coating composition to be ejected, the pattern opening, and the like.

In a case where the base material is coated with the anti-fogging coating composition according to spray coating, the amount of air is preferably in a range of 5 L (liter)/min to 600 L/min, the amount of the coating material to be ejected is preferably in a range of 5 L/min to 600 L/min, and the pattern opening is preferably in a range of 40 mm to 450 mm.

In the spray coating, the environment where the coating is carried out affects the formation of the coated film. As the conditions for the coating, the temperature is preferably in a range of 15°C to 35°C and the humidity is preferably 80%RH or less.

The cleanliness is not particularly limited. However, for example, from the viewpoint of suppressing the planar failure due to fine particles (in other words, particles) in the coating environment, the cleanliness is preferably class 10000 or more and more preferably 1000 or more.

The coating amount of the anti-fogging coating composition is not particularly limited and can be appropriately set in consideration of the operability according to the concentration of solid contents in the anti-fogging coating composition, the desired film thickness, and the like. For example, the coating amount of the anti-fogging coating composition is preferably in a range of 1 $mL/m^2$ to 400 $mL/m^2$, more preferably in a range of 2 $mL/m^2$ to 100 $mL/m^2$, still more preferably in a range of 4 $mL/m^2$ to 40 $mL/m^2$, and particularly preferably in a range of 6 $mL/m^2$ to 20 $mL/m^2$. In a case where the coating amount thereof is in the above-described range, the coating accuracy is improved.

It is preferable that the method of producing the laminate according to the embodiment of the present disclosure includes drying of the anti-fogging coating composition applied to the base material.

The anti-fogging coating composition may be dried using a heating device. The heating device is not particularly limited as long as the anti-fogging coating composition can be heated to an intended temperature, and any known heating device can be used. As the heating device, a heating device which is independently prepared according to the production line can be used in addition to an oven or an electric furnace.

The conditions for drying the anti-fogging coating composition is not particularly limited and can be appropriately set in consideration of the curability of the coated film.

The anti-fogging coating composition may be dried under a constant temperature condition in which a predetermined set temperature is kept or may be dried by gradually changing the temperature condition.

As the condition for drying the anti-fogging coating composition in the former case, the anti-fogging coating composition is dried by being heated preferably under a surface temperature condition of 20°C to 150°C for 1 minute to 60 minutes, more preferably under a surface temperature condition of 40°C to 150°C for 1 minute to 60 minutes, and still more preferably under a surface temperature condition of 60°C to 150°C for 1 minute to 60 minutes.

In the latter case, it is preferable that the anti-fogging coating composition is dried by dividing the drying process into preliminary drying and the main drying. As the condition for preliminary drying, it is preferable that the anti-fogging coating composition is dried by being heated under a surface temperature condition of 20°C to 60°C for 5 seconds to 10 minutes.

Further, the surface temperature can be measured using an infrared thermometer or the like.

In a case where the anti-fogging coating composition is dried by blowing dry air, the amount of dry air can be appropriately set in consideration of the optimum temperature at the time of the dry air reaching the base material. However, in consideration of the drying unevenness, it is preferable that the amount of air is suppressed to be low as much as possible and more preferable that the anti-fogging coating composition is dried without air, in other words, under a condition in which dry air is not directly applied to the base material.

Further, the base material coated with the anti-fogging coating composition may be dried by being directly placed (placed flat) on a pedestal, dried by being placed upright, or dried by being hung, depending on the shape of the base material.

Components of a spray gun or a coating device after being used for coating the base material may be washed using a solvent such as a thinner, water, alcohol, or a surfactant. Further, in order to effectively wash stain to which the scale or the like has been adhered and the remaining anti-fogging coating composition, it is preferable that the stain and the remaining anti-fogging coating composition are washed using an acidic or alkaline aqueous solution and more preferable that the stain and the remaining anti-fogging coating composition are washed using an aqueous solution having a pH of 3.0 or less or an aqueous solution having a pH of 8.0 or more. The temperature of the washing solution is preferably room temperature or higher and more preferably 50°C or higher.

The storage container for the anti-fogging coating composition is not particularly limited and may be a metal container such as an eighteen-liter drum or a royal can or a container made of a resin such as polyethylene or polypropylene.

The temperature for storing the anti-fogging coating composition is preferably in a range of 0°C to 50°C.

(Anti-fogging coating composition)

The anti-fogging coating composition according to the embodiment of the present disclosure is not particularly limited as long as an anti-fogging layer in the laminate according to the embodiment of the present disclosure can be formed using the composition, and it is preferable that the anti-fogging coating composition contains a hydrolyzate of a siloxane compound represented by Formula (1), silica particles, and a water absorption organic polymer, in which, in a case where the solid mass of the water absorption organic polymer is set as A, the solid mass of the silica particles is set as B, and the solid weight of the hydrolyzate of the siloxane compound is set as C', Relational Expression (A) and Relational Expression (B') are satisfied.

$$0.01 \leq A/B \leq 0.20 \text{ Relational Expression (A)}$$

$$0.15 \leq C'/B \leq 2.00 \text{ Relational Expression (B')}$$

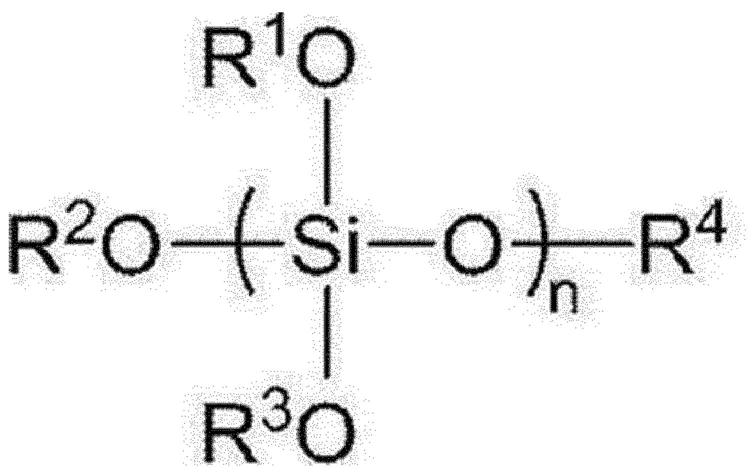

Formula (1)

In Formula (1), $R^1$, $R^2$, $R^3$, and $R^4$ each independently represent a monovalent organic group having 1 to 6 carbon atoms. n represents an integer of 2 to 20.

The preferable aspects of the hydrolyzate of the siloxane compound represented by Formula (1), the silica particles, and the water absorption organic polymer in the anti-fogging coating composition according to the embodiment of the present disclosure are the same as the preferable aspects of the hydrolyzate of the siloxane compound represented by Formula (1), the silica particles, and the water absorption organic polymer in the anti-fogging layer of the laminate according to the embodiment of the present disclosure except for the description below.

The content of the water absorption organic polymer in the anti-fogging coating composition according to the embodiment of the present disclosure is preferably in a range of 0.1% by mass to 20% by mass, more preferably in a range of 0.2% by mass to 15% by mass, and still more preferably in a range of 0.4% by mass to 15% by mass with respect to the total solid content of the anti-fogging coating composition. In a case where the content thereof is in the above-described range, an anti-fogging layer having excellent stain resistance and water drip trace suppressibility is obtained.

Further, from the viewpoints of the anti-fogging properties, the stain resistance, the water drip trace suppressibility, the crack suppressibility, and the transparency, in a case where the solid mass of the water absorption organic polymer in the anti-fogging coating composition according to the embodiment of the present disclosure is set as A and the solid mass of the silica particles in the anti-fogging coating composition according to the embodiment of the present disclosure is set as B, it is preferable that Relational Expression (A1) is satisfied and more preferable that Relational Expression (A2) is satisfied.

$$0.02 \leq A/B \leq 0.15 \text{ Relational Expression (A1)}$$

$$0.04 \leq A/B \leq 0.10 \text{ Relational Expression (A2)}$$

Further, from the viewpoints of the stain resistance, the water drip trace suppressibility, and the adhesiveness to the base material, in a case where the solid mass of the silica particles in the anti-fogging layer is denoted as B and the solid weight of the hydrolyzate in the siloxane compound in the anti-fogging layer is denoted as C', it is preferable that Relational Expression (B'1) is satisfied and more preferable that Relational Expression (B'2) is satisfied.

$$0.15 \leq C'/B \leq 1.50 \text{ Relational Expression (B'1)}$$

$$0.20 \leq C'/B \leq 1.30 \text{ Relational Expression (B'2)}$$

The content of the siloxane binder in the anti-fogging coating composition according to the embodiment of the present disclosure is preferably 1% by mass or more, more preferably 5% by mass or more, and still more preferably 10% by mass or more with respect to the total solid content of the anti-fogging coating composition.

Further, the content of the siloxane binder in the anti-fogging coating composition according to the embodiment of the present disclosure is preferably 80% by mass or less, more preferably 60% by mass or less, and still more preferably 40% by mass or less with respect to the total solid content of the anti-fogging coating composition.

In a case where the content of the siloxane binder in the anti-fogging coating composition according to the embodiment of the present disclosure is 1% by mass or more with respect to the total solid content of the anti-fogging coating composition, an anti-fogging layer having excellent crack suppressibility, adhesiveness to the base material, and stain resistance can be formed. Further, in a case where the content of the siloxane binder in the anti-fogging coating composition according to the embodiment of the present disclosure is in a range of 1% by mass to 80% by mass with respect to the total solid content of the anti-fogging coating composition, an anti-fogging layer having excellent stain resistance can be formed because the water contact angle of the surface is suppressed to be low.

The content of the silica particles in the anti-fogging coating composition according to the embodiment of the present disclosure is preferably in a range of 10% by mass to 90% by mass, more preferably in a range of 20% by mass to 70% by mass, and still more preferably in a range of 40% by mass to 70% by mass with respect to the total solid content of the anti-fogging coating composition. In a case where the content thereof is in the above-described range, an anti-fogging layer having excellent hardness, scratch resistance, and impact resistance and having desired hydrophilicity can be formed.

<Ketone-based solvent>

It is preferable that the anti-fogging coating composition according to the embodiment of the present disclosure contains a ketone-based solvent.

In the anti-fogging coating composition according to the embodiment of the present disclosure, the ketone-based solvent contributes to improvement of the adhesiveness to the base material.

The ketone-based solvent is not particularly limited, and examples thereof include acetone, diacetone alcohol, acetyl acetone, methyl ethyl ketone, methyl isobutyl ketone, diisobutyl ketone, cyclohexanone, and cyclopentanone.

From the viewpoint of forming a film having excellent transparency, it is preferable that the ketone-based solvent is a ketone-based solvent having an SP value (solubility parameter) of 10.0 $MPa^{1/2}$. Further, the upper limit of the SP value of the ketone-based solvent is not particularly limited, but is preferably 13.0 $MPa^{1/2}$ or less from the viewpoint of the coatability (for example, a property in which planar failure such as cissing is unlikely to occur) to the base material.

Specific examples of the ketone-based solvent having an SP value of 10.0 $MPa^{1/2}$ are described below. Here,

the present embodiment is not limited to the following specific examples. Further, the above-described method is used as the method of measuring the SP value. The numerical values in the parentheses after each specific example indicate SP values (unit: $MPa^{1/2}$).

Acetone (10.0), diacetone alcohol (10.2), acetyl acetone (10.3), cyclopentanone (10.4)

Among these, it is preferable that the anti-fogging coating composition contains diacetone alcohol(4-hydroxy-4-methyl-2-pentanone).

The anti-fogging coating composition according to the embodiment of the present disclosure may contain only one or two or more kinds of ketone-based solvents.

The content of the ketone-based solvent in the anti-fogging coating composition according to the embodiment of the present disclosure is preferably in a range of 1% by mass to 95% by mass. Further, from the viewpoints of the transparency and the adhesiveness to the base material, the content thereof is more preferably in a range of 2% by mass to 50% by mass and particularly preferably in a range of 3% by mass to 10% by mass. The content of the ketone-based solvent in the anti-fogging coating composition according to the embodiment of the present disclosure can be appropriately set depending on the kind of the base material to be used and the solubility of the material contained in the anti-fogging coating composition.

<Water>

From the viewpoints of the transparency and the adhesiveness to the base material, it is preferable that the anti-fogging coating composition according to the embodiment of the present disclosure contains water.

The content of water in the anti-fogging coating composition according to the embodiment of the present disclosure is not particularly limited and can be appropriately set.

From the viewpoints of the transparency and the adhesiveness to be base material, the content of the water in the anti-fogging coating composition is preferably in a range of 1% by mass to 70% by mass, more preferably in a range of 10% by mass to 65% by mass, and still more preferably in a range of 20% by mass to 60% by mass with respect to the total mass of the solvents contained in the anti-fogging coating composition.

<Specific solvent>

It is preferable that the anti-fogging coating composition according to the embodiment of the present disclosure further contains at least one solvent (hereinafter, also referred to as a "specific solvent") selected from the group consisting of an alcohol-based solvent, a glycol ether-based solvent, and an ether-based solvent.

In a case where the anti-fogging coating composition according to the embodiment of the present disclosure further contains a specific solvent in addition to the ketone-based solvent described above, a film having excellent adhesiveness can be formed.

In the present specification, the "alcohol-based solvent" indicates a solvent having a structure in which one carbon atom of a hydrocarbon is substituted with one hydroxy group.

In the present specification, the "glycol ether-based solvent" indicates a solvent having a structure in which one molecule has one hydroxy group and at least one ether group.

In the present specification, the "ether-based solvent" indicates a solvent having a structure in which one molecule does not have a hydroxy group and has at least one ether group.

Examples of the alcohol-based solvent include methanol, ethanol, butanol, n-propanol, 2-propanol, tert-butanol, 2-butanol, benzyl alcohol, 2-methyl-1-butanol, and 2-methyl-2-butanol.

Examples of the glycol ether-based solvent include diethylene glycol monomethyl ether, diethylene glycol monoethyl ether, diethylene glycol monobutyl ether, triethylene glycol monomethyl ether, propylene glycol monomethyl ether, propylene glycol monobutyl ether, 3-methoxy-3-methyl-1-butanol, diethylene glycol monohexyl ether, propylene glycol monomethyl ether propionate, dipropylene glycol methyl ether, methyl cellosolve, ethyl cellosolve, and butyl cellosolve.

Examples of the ether-based solvent include isopropyl ether, 1,4-dioxane, tert-butyl methyl ether, tetrahydrofuran, 2-methyltetrahydrofuran, 1,2-dimethoxyethane, and diethyl ether.

In a case where the anti-fogging coating composition according to the embodiment of the present disclosure contains a specific solvent, the anti-fogging coating composition may contain only one or two or more kinds of specific solvents.

In the case where the anti-fogging coating composition according to the embodiment of the present disclosure contains a specific solvent, the content of the specific solvent in the anti-fogging coating composition is not particularly limited.

From the viewpoint of the coatability (for example, planar failure such as cissing is unlikely to occur) to the base material, the content of the specific solvent in the anti-fogging coating composition according to the embodiment of the

present disclosure is preferably 5% by mass or more, more preferably 10% by mass or more, still more preferably 20% by mass or more, and particularly preferably 40% by mass or more with respect to the total mass of the solvents contained in the anti-fogging coating composition.

Further, from the viewpoint of the adhesiveness to the base material, the content of the specific solvent in the anti-fogging coating composition according to the embodiment of the present disclosure is preferably 75% by mass or less, more preferably 65% by mass or less, and still more preferably 55% by mass or less with respect to the total mass of the solvents contained in the anti-fogging coating composition.

In a case where the anti-fogging coating composition according to the embodiment of the present disclosure contains specific solvents, from the viewpoints of the coatability to the base material and the adhesiveness to the base material, the ratio of the content of the specific solvents (in other words, the total content of the alcohol-based solvent, the glycol ether-based solvent, and the ether-based solvent) to the content of the ketone-based solvent in the anti-fogging coating composition is preferably in a range of 0.1 to 51.4 on a mass basis. The ratio of the content of the specific solvents to the content of the ketone-based solvent in the anti-fogging coating composition according to the embodiment of the present disclosure can be appropriately set depending on the kind of the base material to be used and the solubility of the material contained in the anti-fogging coating composition.

From the viewpoint of satisfactorily ensuring the stability of the anti-fogging coating composition over time, the total content of the solvents in the anti-fogging coating composition according to the embodiment of the present disclosure is preferably 50% by mass or more, more preferably 70% by mass or more, and particularly preferably 90% by mass or more with respect to the total mass of the anti-fogging coating composition.

<Other components>

The anti-fogging coating composition according to the embodiment of the present disclosure may contain components other than the components described above as necessary. Examples of other components include a viscosity adjuster that adjusts the viscosity of the anti-fogging coating composition, a catalyst (hereinafter, also referred to as a "condensation-promoting catalyst") that promotes the condensation reaction of the hydrolyzate in the specific siloxane compound, a surfactant, a pH adjuster, and other components (such as an adhesion assistant and an antistatic agent) which may be contained in the anti-fogging layer described above.

- Viscosity adjuster -

The anti-fogging coating composition according to the embodiment of the present disclosure may further contain a viscosity adjuster.

In a case where the anti-fogging coating composition according to the embodiment of the present disclosure contains a viscosity adjuster, the viscosity of the anti-fogging coating composition is increased, and liquid drip at the time of coating the base material is unlikely to occur so that the coating suitability is improved.

Further, the viscosity adjuster in the present disclosure may function as the water absorption organic polymer.

The viscosity adjuster is not particularly limited, and examples thereof include known thickeners and solvents having a high viscosity. The viscosity adjuster can be appropriately selected according to the method of applying the anti-fogging coating composition to the base material.

The thickener is not particularly limited, and it is preferable that the thickener is appropriately selected according to the kind of the solvent contained in the anti-fogging coating composition. From the viewpoint that a thickening effect can be obtained with a relatively small amount of use, a thickener having a weight-average molecular weight of 3000 to 10000000 is preferable as the thickener.

Here, the thickener does not contain the urethane-based resin and the (meth)acrylic resin described above.

The weight-average molecular weight of the thickener can be measured according to the same method as the method of measuring the weight-average molecular weight of polyacrylic acid described above.

Specific examples of the thickener include SEPIGEL 305 (manufactured by Seiwa Kasei Co., Ltd.), DISPERBYK (registered trademark) 410, 411, 415, 420, 425, 428, 430, 431, 7410ET, 7411ES, and 7420ES (all manufactured by BYK-Chemi GMbH), COSQUAT GA468 (manufactured by Osaka Organic Chemical Industry Ltd.), inorganic materials [silicate (water-soluble alkali silicate), montmorillonite, organic montmorillonite, or colloidal alumina], fiber derivative-based materials (such as carboxymethyl cellulose, methyl cellulose, ethyl cellulose, hydroxymethyl cellulose, hydroxyethyl cellulose, hydroxypropyl cellulose, hydroxyethyl methyl cellulose, and hydroxypropyl methyl cellulose), protein-based materials (such as casein, sodium caseinate, and ammonium caseinate), alginic acid-based materials (such as sodium alginate), polyvinyl-based materials (such as polyvinyl alcohol, polyvinylpyrrolidone, and a polyvinyl benzyl ether copolymer), polyether-based materials (such as pluronic polyether, polyether dialkyl ester, polyether dialkyl ether, a polyether urethane-modified product, and a polyether epoxy-modified product), maleic anhydride copolymer-based materials (such as partial ester of a vinyl ether-maleic acid copolymer and half ester of dry oil fatty acid allyl alcohol ester-maleic anhydride). Further, other examples of the thickener include a polyamide wax salt, acetylene glycol, xanthan gum, and an oligomer or a polymer having a polar group in a molecular terminal or a side chain.

In a case where the anti-fogging coating composition according to the embodiment of the present disclosure further contains a thickener as a viscosity adjuster, the anti-fogging coating composition may contain only one or two or more kinds of thickeners.

In the case where the anti-fogging coating composition according to the embodiment of the present disclosure contains a thickener as a viscosity adjuster, the content of the thickener in the anti-fogging coating composition is preferably in a range of 0.01% by mass to 40% by mass, more preferably in a range of 0.05% by mass to 20% by mass, and still more preferably 0.1% by mass to 10% by mass with respect to the total mass of the anti-fogging coating composition.

From the viewpoint that viscosity adjuster components do not remain in the film to be formed, a solvent having a high viscosity is preferable as the viscosity adjuster.

In the present specification, the "solvent having a high viscosity" indicates a solvent whose viscosity at 25°C is 30 mPa/s or more.

Further, the viscosity in the present specification is a value measured using a B type viscometer (model: TVB-10, manufactured by Toki Sangyo Co., Ltd.).

Examples of the solvent having a high viscosity include a glycol-based solvent.

In the present specification, the "glycol-based solvent" indicates a solvent having a structure in which two or more carbon atoms of a hydrocarbon are respectively substituted with one hydroxy group.

Examples of the glycol-based solvent include ethylene glycol, diethylene glycol, triethylene glycol, glycerin, propylene glycol, dipropylene glycol, tripropylene glycol, 1,3-propanediol, 1,2-butanediol, 1,3-butanediol, 1,4-butanediol, diethanolamine, triethanolamine, propylene glycol, and dipropylene glycol.

Among these, from the viewpoint of the dispersibility of silica particles and the drying properties at the time of coating the base material, at least one selected from propylene glycol and dipropylene glycol is preferable as the glycol-based solvent.

In a case where the anti-fogging coating composition according to the embodiment of the present disclosure contains a glycol-based solvent as a viscosity adjuster, the anti-fogging coating composition may contain only one or two or more kinds of glycol-based solvents.

In the case where the anti-fogging coating composition according to the embodiment of the present disclosure contains a glycol-based solvent as a viscosity adjuster, the content of the glycol-based solvent in the anti-fogging coating composition is preferably 40% by mass or less, more preferably 20% by mass or less, still more preferably 10% by mass or less, and particularly preferably 5% by mass or less with respect to the total mass of the solvents contained in the anti-fogging coating composition.

In a case where the content of the glycol-based solvent is 40% by mass or less with respect to the total mass of the solvents contained in the anti-fogging coating composition, occurrence of liquid drip of the anti-fogging coating composition at the time of coating the base material is suppressed so that a film having excellent adhesiveness can be formed.

From the viewpoint of the effect for improving the coating suitability resulting from the anti-fogging coating composition further containing a glycol-based solvent, the content of the glycol-based solvent in the anti-fogging coating composition is preferably 0.1% by mass or more with respect to the total mass of the solvents contained in the anti-fogging coating composition.

In a case where the anti-fogging coating composition according to the embodiment of the present disclosure further contains a viscosity adjuster, the viscosity may be adjusted by combining a thickener and a solvent having a high viscosity. The optimum viscosity of the anti-fogging coating composition according to the embodiment of the present disclosure varies depending on the method of coating the base material, but the viscosity of the anti-fogging coating composition is preferably in a range of 2 mPa/s to 200 mPa/s, more preferably in a range of 3 mPa/s to 100 mPa/s, and still more preferably in a range of 4 mPa/s to 50 mPa/s in a case of spray coating.

- Condensation-promoting catalyst -

It is preferable that the anti-fogging coating composition according to the present disclosure contains a catalyst that promotes the condensation reaction (in other words, a condensation-promoting catalyst) of the hydrolyzate of the specific siloxane compound.

In a case where the anti-fogging coating composition according to the embodiment of the present disclosure contains a condensation-promoting catalyst, a film having excellent durability can be formed. In the present disclosure, with reduction of moisture by drying the anti-fogging coating composition after the base material has been coated with the anti-fogging coating composition, at least some hydroxy groups in the hydrolyzate of the specific siloxane compound contained in the anti-fogging coating composition are condensed to form a condensate, thereby forming a stable film.

Further, in the case where the anti-fogging coating composition according to the present disclosure contains a condensation-promoting catalyst, a film can be formed more quickly.

The condensation-promoting catalyst is not particularly limited, and examples thereof include catalysts such as acid catalysts, alkali catalysts, and organometallic catalysts.

Examples of the acid catalysts include nitric acid, hydrochloric acid, sulfuric acid, acetic acid, phosphoric acid, chloroacetic acid, formic acid, oxalic acid, toluenesulfonic acid, xylene sulfonic acid, cumene sulfonic acid, dinonylnaphthalene monosulfonic acid, dinonylnaphthalene disulfonic acid, dodecylbenzene sulfonic acid, a polyphosphate, and a metaphosphate.

Among these, as the acid catalyst, at least one selected from the group consisting of phosphoric acid, toluenesulfonic acid, a polyphosphate, and a metaphosphate is preferable.

Examples of the alkali catalyst include sodium hydroxide, potassium hydroxide, tetamethylammonium hydroxide, sodium hydrogen carbonate, and urea.

Among these, as the alkali catalyst, at least one selected from sodium bicarbonate or urea is preferable.

Examples of the organometallic catalyst include an aluminum chelate compound such as aluminum bis(ethylacetoacetate)mono(acetylacetonate), aluminum tris(acetylacetonate), or aluminum ethyl acetoacetate diisopropylate; a zirconium chelate compound such as zirconium tetrakis(acetylacetonate), or zirconium bis(butoxy)bis(acetylacetonate); a titanium chelate compound such as titanium tetrakis(acetylacetonate), or titanium bis(butoxy)bis(acetylacetonate); an organotin compound such as dibutyltin diacetate, dibutyltin dilaurate, or dibutyltin dioctylate; aluminum alkoxide such as aluminum ethylate, aluminum isopropylate, or aluminum sec-butylate; titanium alkoxide such as titanium (IV) ethoxide, titanium isopropoxide, or titanium (IV) n-butoxide; and zirconium alkoxide such as zirconium (IV) ethoxide, zirconium (IV) n-propoxide, or zirconium (IV) n-butoxide.

Among these, at least one selected from the group consisting of an aluminum chelate compound, a titanium chelate compound, and a zirconium chelate compound is preferable as the organometallic catalyst.

Among these, from the viewpoint of the crack suppressibility of the anti-fogging layer to be obtained, as the condensation-promoting catalyst, an organometallic catalyst is more preferable, and an aluminum chelate compound is still more preferable.

In a case where the anti-fogging coating composition according to the embodiment of the present disclosure contains a condensation-promoting catalyst, the anti-fogging coating composition may contain only one or two or more kinds of condensation-promoting catalysts.

In the case where the anti-fogging coating composition according to the embodiment of the present disclosure contains a condensation-promoting catalyst, the content of the condensation-promoting catalyst in the anti-fogging coating composition is preferably in a range of 0.1% by mass to 40% by mass, more preferably in a range of 1% by mass to 30% by mass, and still more preferably in a range of 5% by mass to 20% by mass with respect to the total solid content of the anti-fogging coating composition. In a case where the content thereof is in the above-described range, an anti-fogging layer having excellent transparency can be formed more quickly.

Further, the content of the aluminum chelate compound in the anti-fogging coating composition is preferably in a range of 0.1% by mass to 40% by mass, more preferably in a range of 1% by mass to 30% by mass, and still more preferably in a range of 5% by mass to 20% by mass with respect to the total solid content of the anti-fogging coating composition. In a case where the content thereof is in the above-described range, an anti-fogging layer having excellent crack suppressibility and transparency can be formed more quickly.

- Surfactant -

It is preferable that the anti-fogging coating composition according to the embodiment of the present disclosure contains a surfactant.

In a case where the anti-fogging coating composition according to the embodiment of the present disclosure contains a surfactant, a film having an excellent property of preventing adhesion of contaminants, in other words, an excellent antifouling property can be formed.

Here, the surfactant does not include a compound (that is, an ionic surfactant) exhibiting surface activity and having an antistatic function, which is exemplified as an antistatic agent above.

In the anti-fogging coating composition according to the embodiment of the present disclosure, an antistatic agent and a surfactant may be used in combination regardless of whether or not the antistatic agent exhibits surface activity.

In a case where the antistatic agent is a compound that does not exhibit surface activity, from the viewpoint of water washing properties, it is preferable that the anti-fogging coating composition contains a surfactant. In a case where the antistatic agent is a compound that exhibits surface activity, from the viewpoint of further improving the antifouling property, it is preferable that the anti-fogging coating composition contains a surfactant separately from the antistatic agent.

In a case where the anti-fogging coating composition according to the embodiment of the present disclosure contains a surfactant, the antifouling property of the film to be formed as well as the coatability in a case where the film is formed by coating the base material are improved. Specifically, in the case where the anti-fogging coating composition according to the embodiment of the present disclosure contains a surfactant, since the surface tension of the anti-fogging coating composition is decreased, the uniformity of the film is further increased.

- Non-ionic surfactant -

Examples of the surfactant include non-ionic surfactants.
In a case where an ionic surfactant is used as an antistatic agent, the electrolytic mass in the system is increased and this may easily lead to aggregation of silica particles in a case where the anti-fogging coating composition contains an excessive amount of the ionic surfactant. Accordingly, it is preferable that a non-ionic surfactant is used in combination with the ionic surfactant. However, the non-ionic surfactant is not necessarily used in combination with an ionic surfactant, and the anti-fogging coating composition may contain a single non-ionic surfactant as a surfactant.
Examples of the non-ionic surfactant include polyalkylene glycol monoalkyl ether, polyalkylene glycol monoalkyl ester, and polyalkylene glycol monoalkyl ester monoalkyl ether. Specific examples of the non-ionic surfactant include polyethylene glycol monolauryl ether, polyethylene glycol monostearyl ether, polyethylene glycol monocetyl ether, polyethylene glycol monolauryl ester, and polyethylene glycol monostearyl ester.
In the case where the anti-fogging coating composition according to the embodiment of the present disclosure contains a non-ionic surfactant, from the viewpoint of forming an anti-fogging layer having excellent hydrophilicity and an excellent antifouling property, a non-ionic surfactant (hereinafter, also referred to as a "specific non-ionic surfactant") having a HLB (hydrophile-lipophile balance) value of more than 15 is preferable as the non-ionic surfactant.
In a case where the anti-fogging coating composition according to the embodiment of the present disclosure contains a specific non-ionic surfactant, the hydrophilicity of the anti-fogging layer to be formed is improved, and the property of preventing adhesion of contaminants (for example, silicone) which are hydrophobic components is improved.
The HLB value of the specific non-ionic surfactant is preferably 15.5 or more, more preferably 16 or more, still more preferably 17 or more, and particularly preferably 18 or more.
The upper limit of the HLB value of the specific non-ionic surfactant is not particularly limited and is preferably, for example, 20 or less.
The HLB (hydrophile-lipophile balance) value of a surfactant indicates the hydrophile-lipophile balance of the surfactant.
The HLB value of the surfactant in the present specification is defined by Equation (I) according to Griffin method (fully revised edition, Introduction to New Surfactants, p. 128) and is a value which is arithmetically acquired.

$$\text{HLB value of surfactant} = (\text{molecular weight of hydrophilic group moiety/molecular weight of surfactant}) \times 20 \cdots \text{(I)}$$

Examples of the specific non-ionic surfactant include polyoxyalkylene alkyl ether, polyoxyalkylene alkyl phenol ether, polyoxyalkylene aryl ether, polyoxyalkylene alkyl aryl ether, a sorbitan derivative, a formalin condensate of polyoxyalkylene aryl ether, a formalin condensate of polyoxyalkylene alkyl aryl ether, and polyethylene glycol.
Among these, as the specific non-ionic surfactant, polyoxyalkylene alkyl ether is particularly preferable.
Examples of the alkyl group of the polyoxyalkylene alkyl ether in the specific non-ionic surfactant include a linear alkyl group having 1 to 36 carbon atoms and a branched alkyl group having 3 to 36 carbon atoms.
Further, from the viewpoint of forming a film having particularly excellent hydrophilicity, it is preferable that the oxyalkylene moiety in polyoxyalkylene alkyl ether is polyoxyethylene. The number of polyoxyethylene structural units included in the specific non-ionic surfactant is preferably 6 or more, more preferably 10 or more, still more preferably 15 or more, and particularly preferably 20 or more. Further, from the viewpoint of the solubility, the number of polyoxyethylene structural units can be set to 100 or less.
In a case where the specific non-ionic surfactant is polyoxyalkylene alkyl ether, a surfactant represented by Formula (II) is preferable.

$$RO\text{-}(C_2H_4O)m\text{-}H \ldots \qquad \text{(II)}$$

In Formula (II), m represents an integer of 6 to 100. R represents a linear alkyl group having 1 to 36 carbon atoms or a branched alkyl group having 3 to 36 carbon atoms.
As the specific non-ionic surfactant, commercially available products can be used. Examples of the commercially

available products of the specific non-ionic surfactant include EMALEX 715 (HLB value: 15.6), EMALEX 720 (HLB value: 16.5), EMALEX 730 (HLB value: 17.5), and EMALEX 750 (HLB value: 18.4) (all trade names, manufactured by Nihon Emulsion Co., Ltd., polyoxyethylene lauryl ether), RHEODOL TW-P120 (trade name, manufactured by Kao Corporation, polyoxyethylene sorbitan monopalmitate, HLB value: 15.6), and PEG2000 (trade name, manufactured by Sanyo Chemical Industries, Ltd., HLB value: 19.9).

In a case where the anti-fogging coating composition according to the embodiment of the present disclosure contains a non-ionic surfactant, the anti-fogging coating composition may contain only one or two or more kinds of non-ionic surfactants.

In the case where the anti-fogging coating composition according to the embodiment of the present disclosure contains a non-ionic surfactant (preferably a specific non-ionic surfactant), the content of the non-ionic surfactant in the anti-fogging coating composition is preferably in a range of 0.01% by mass to 15% by mass, more preferably in a range of 0.1% by mass to 10% by mass, and still more preferably in a range of 1% by mass to 10% by mass with respect to the total solid content of the anti-fogging coating composition. In a case where the content thereof is in the above-described range, the hydrophilicity of the anti-fogging layer to be formed is improved, and the property of preventing adhesion of contaminants (for example, silicone) which are hydrophobic components is improved.

- Ionic surfactant -

Examples of the surfactant include ionic surfactants.

As the ionic surfactant, an ionic surfactant (hereinafter, also referred to as a "specific ionic surfactant") containing at least one of a phosphoric acid group or a carboxy group is preferable.

In a case where the anti-fogging coating composition according to the embodiment of the present disclosure contains a specific ionic surfactant, at least one functional group of the phosphoric acid group or the carboxy group contained in the specific ionic surfactant functions as an acid adsorptive group and is adsorbed to the surface of the silica particle described above. Due to this adsorption, the dispersion stability of the silica particles is improved. Further, due to this adsorption, since adsorption of hydrophobic components to the surface of the silica particle is suppressed, the excellent antifouling property is maintained without impairing excellent hydrophilicity resulting from the silica particles.

As the specific ionic surfactant, an anionic surfactant is preferable from the viewpoint of the adsorptivity to silica particles, and a compound which contains a hydrophobic group selected from an alicyclic hydrocarbon group such as a hydrocarbon group having 1 to 36 carbon atoms, a cyclohexyl group, or a cyclobutyl group and an aromatic hydrocarbon group such as a styryl group, a naphthyl group, a phenyl group, or a phenylene ether group as a hydrophobic group and also contains at least one of a phosphoric acid group or a carboxy group as an acid adsorptive group is more preferable. Further, the above-described hydrophobic group may further have a substituent.

It is preferable that the specific ionic surfactant contains at least one functional group selected from a phosphoric acid group and a carboxy group as an acid adsorptive group. In other words, it is preferable that the specific ionic surfactant does not contain an acid adsorptive group other than the phosphoric acid group and the carboxy group, such as a sulfonic acid group or a sulfuric acid group.

Examples of the specific ionic surfactant containing a phosphoric acid group include alkyl phosphate ester salt and polyoxyethylene alkyl ether phosphate.

Examples of the specific ionic surfactant containing a carboxy group include N-acylamino acid, polyoxyethylene alkyl ether carboxylate, aliphatic carboxylate, aliphatic dicarboxylate, a polycarboxylic acid-copolymer having a weight-average molecular weight of less than 25000, and a maleic acid-based copolymer having a weight-average molecular weight of less than 25000.

From the viewpoints of the dispersion stability of silica particles and the adsorption suppressibility of hydrophobic components, the acid value of the specific ionic surfactant is preferably 180 mgKOH/g or less and more preferably 100 mgKOH/g or less.

The lower limit of the acid value of the specific ionic surfactant is not particularly limited, but is preferably 3 mgKOH/g.

The acid value of the specific ionic surfactant in the present specification can be measured by titration of an indicator. Specifically, the acid value thereof is a value calculated by measuring the number of milligrams of potassium hydroxide that neutralizes acid components in 1 g of the solid content of the specific ionic surfactant according to the method described in JIS (Japanese Industrial Standard) K 0070.

As the specific ionic surfactant, commercially available products can be used. Examples of the commercially available products of the specific ionic surfactant include DISPERBYK (registered trademark)-2015 (acid adsorptive group: carboxy group, acid value: 10 mgKOH/g, solid content: 40% by mass) and DISPERBYK (registered trademark)-180 (acid adsorptive group: phosphoric acid group, acid value: 94 mgKOH/g) (both manufactured by BYK-Chemi GMbH); and TEGO (registered trademark) Dispers660C (acid adsorptive group: phosphoric acid group, acid value: 30 mgKOH/g) and BYK (registered trademark)-P104 (acid adsorptive group: carboxy group, acid value: 180 mgKOH/g) (both manufactured by Evonik Industries AG).

In a case where the anti-fogging coating composition according to the embodiment of the present disclosure contains an ionic surfactant, the anti-fogging coating composition may contain only one or two or more kinds of ionic surfactants.

In the case where the anti-fogging coating composition according to the embodiment of the present disclosure contains an ionic surfactant (preferably a specific ionic surfactant), the content of the ionic surfactant in the anti-fogging coating composition is preferably in a range of 0.05% by mass to 50% by mass, more preferably in a range of 0.5% by mass to 20% by mass, and still more preferably in a range of 1% by mass to 15% by mass with respect to the total solid content of the anti-fogging coating composition. In a case where the content thereof is in the above-described range, the effect of preventing aggregation of silica particles and the effect of preventing adsorption of hydrophobic components are further increased so that the effect for improving the antifouling property of the hydrophilic film resulting from containing an ionic surfactant tends to be obtained.

<Method of preparing anti-fogging coating composition>

It is preferable that the anti-fogging coating composition according to the embodiment of the present disclosure is prepared by mixing the specific siloxane compound, the silica particles, the water absorption organic polymer, and as necessary, a ketone-based solvent, water, and optional components described above.

For example, according to the method of preparing the anti-fogging coating composition according to the embodiment of the present disclosure, first, it is preferable that a hydrolyzed solution containing a hydrolyzate of the specific siloxane compound is prepared by mixing the specific siloxane compound with a solvent containing water to form a hydrolyzate of the specific siloxane compound.

Next, a ketone-based solvent and silica particles are added to the obtained hydrolyzed solution. At this time, as the above-described optional components, a specific solvent, polyacrylic acid, a glycol-based solvent, a surfactant, a condensation-promoting catalyst, an antistatic agent, and the like can be added to the solution as desired.

The hydrolysis reaction of the specific siloxane compound proceeds at room temperature (25°C). However, in order to promote the reaction, the specific siloxane compound and water are brought into contact with each other to prepare a mixed solution, and then the obtained mixed solution may be heated at 30°C to 50°C. It is preferable that the reaction time for the hydrolysis reaction becomes longer because the reaction further proceeds. From the viewpoint of sufficiently promoting the hydrolysis reaction, it is also preferable that the reaction is carried out for 1 hour to 36 hours in a state in which the solution is heated.

Further, in a case where a catalyst that promotes the hydrolysis reaction of the specific siloxane compound is allowed to coexist in the mixed solution containing the specific siloxane compound and water, a hydrolyzate of the specific siloxane compound necessary for the hydrophilicity can be obtained even in half a day.

Since the hydrolysis reaction of the specific siloxane compound is a reversible reaction, the condensation reaction between hydroxy groups of the hydrolyzate of the specific siloxane compound starts and proceeds in a case where water is removed from the mixed solution containing the specific siloxane compound and the hydrolyzate. Therefore, in a case where the hydrolysis reaction of the specific siloxane compound is promoted to obtain a hydrolyzate of the specific siloxane compound in the mixed solution containing the specific siloxane compound and water (preferably an excessive amount of water), it is preferable that the obtained hydrolyzate is not isolated and silica particles and the like are mixed into the mixed solution to prepare the anti-fogging coating composition.

Further, in a case where the moisture content in the anti-fogging coating composition is decreased due to storage or the like, since the condensation reaction of the hydrolyzate of the specific siloxane compound proceeds, a condensation reaction product of the hydrolyzate of the specific siloxane compound is contained in the anti-fogging coating composition in some cases.

Examples

Hereinafter, the present disclosure will be described based on examples, but the present disclosure is not limited thereto. Further, in the examples, "%" indicates "% by mass" unless otherwise specified.

<Preparation of mother liquor A1>

The following components were mixed to obtain a mixture.

Ethanol (solvent): 17.02 parts by mass

MKC (registered trademark) silicate MS51 (partially hydrolyzed oligomer of tetramethoxysilane, manufactured by Mitsubishi Chemical Corporation, siloxane oligomer): 0.73 parts by mass

Aluminum chelate D (1 mass% ethanol solution, manufactured by Kawaken Fine Chemicals Co., Ltd., condensation

catalyst (aluminum chelate compound)): 0.11 parts by mass
Further, 22.29 parts by mass of water (solvent) was gradually added to the mixture, and the solution was stirred at room temperature (25°C, the same applies hereinafter) for 24 hours or longer. In this manner, the siloxane oligomer was hydrolyzed, thereby preparing a mother liquor A1.

<Preparation of silica dispersion B1>

Ethanol (solvent): 21.93 parts by mass
DISPERBYK (registered trademark)-2015 (solid content of 40%, manufactured by BYK-Chemi GMbH, dispersant): 1.02 parts by mass
SNOWTEX (registered trademark) OUP (manufactured by Nissan Chemical Corporation, solid content of 15%, chain-like silica particle dispersion): 13.60 parts by mass
The above-described components were added and mixed, thereby preparing a silica dispersion B1.

<Preparation of coating solution 1>

Mother liquor A1 (hydrolyzed solution): 40.15 parts by mass
Water (solvent): 0.15 parts by mass
Diacetone alcohol (solvent): 2.89 parts by mass
Aluminum chelate D (10 mass% ethanol solution, manufactured by Kawaken Fine Chemicals Co., Ltd., condensation catalyst): 2.22 parts by mass
EMALEX 715 (10 mass% aqueous solution, manufactured by Nihon Emulsion Co., Ltd., surfactant): 0.82 parts by mass
Sodium di(2-ethylhexyl)sulfosuccinate (0.2% aqueous solution, manufactured by NOF Corporation, surfactant): 0.84 parts by mass
Silica dispersion B1 (silica particles): 36.55 parts by mass
Polyacrylic acid 250000 (0.1% aqueous solution, manufactured by Wako Pure Chemical Industries, Ltd.): 1.87 parts by mass
1 mass% diluent (water absorption organic polymer) prepared using a mixed solution containing water and ethanol (mass ratio: 1:1) of hydroxyethyl cellulose (HEC, 4500 mPa·s to 6500 mPa·s (2% aqueous solution), manufactured by Tokyo Chemical Industries Co., Ltd.): 14.51 parts by mass
The above-described components were mixed, thereby preparing a coating solution 1.

<Preparation of mother liquor A3>

The following components were mixed to obtain a mixture.
Ethanol (solvent): 15.23 parts by mass
KBE-04 (tetraethoxysilane, siloxane oligomer, manufactured by Shin-Etsu Chemical Co., Ltd.): 0.12 parts by mass
KBE-403 (3-glycidoxypropyltriethoxysilane, siloxane oligomer, manufactured by Shin-Etsu Chemical Co., Ltd.): 0.65 parts by mass
Aluminum chelate D (1 mass% ethanol solution, manufactured by Kawaken Fine Chemicals Co., Ltd., condensation catalyst): 0.12 parts by mass
Further, 15.73 parts by mass of water (solvent) was gradually added to the mixture, and the solution was stirred at room temperature for 24 hours or longer. In this manner, the siloxane was hydrolyzed, thereby preparing a mother liquor A3.

<Preparation of coating solution 3>

A coating solution 3 was obtained by performing preparation in the same manner as that for the coating solution 1 except that the mother liquor A1 in the coating solution 1 was changed to the mother liquor A3.

<Preparation of mother liquor A4>

The following components were mixed to obtain a mixture.
Ethanol (solvent): 15.23 parts by mass
MKC (registered trademark) silicate MS51 (siloxane oligomer, manufactured by Mitsubishi Chemical Corporation): 0.77 parts by mass
Aluminum chelate D (1 mass% ethanol solution, manufactured by Kawaken Fine Chemicals Co., Ltd., condensation catalyst): 0.12 parts by mass
Further, 15.73 parts by mass of water (solvent) was gradually added to the mixture, and the solution was stirred at room

temperature for 24 hours or longer. In this manner, the siloxane oligomer was hydrolyzed, thereby preparing a mother liquor A4.

<Preparation of silica dispersion B4>

Ethanol (solvent): 23.28 parts by mass
DISPERBYK (registered trademark)-2015 (solid content of 40%, manufactured by BYK-Chemi GMbH, dispersant): 1.08 parts by mass
SNOWTEX (registered trademark) OUP (manufactured by Nissan Chemical Corporation, solid content of 15%, silica particle dispersion): 14.43 parts by mass
The above-described components were mixed, thereby preparing a silica dispersion B4.

<Preparation of coating solution 4>

Mother liquor A4 (hydrolyzed solution): 31.84 parts by mass
Water (solvent): 11.98 parts by mass
Ethanol (solvent): 6.47 parts by mass
Diacetone alcohol (solvent): 2.89 parts by mass
Aluminum chelate D (10 mass% ethanol solution, manufactured by Kawaken Fine Chemicals Co., Ltd., condensation catalyst): 2.27 parts by mass
EMALEX 715 (10 mass% aqueous solution, manufactured by Nihon Emulsion Co., Ltd., surfactant): 0.84 parts by mass
Sodium di(2-ethylhexyl)sulfosuccinate (0.2% aqueous solution, manufactured by NOF Corporation, surfactant): 0.84 parts by mass
Silica dispersion B4 (silica particles): 38.79 parts by mass
Polyacrylic acid 250000 (0.1% aqueous solution, manufactured by Wako Pure Chemical Industries, Ltd.): 1.91 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 2.16 parts by mass
The above-described components were mixed, thereby preparing a coating solution 4.

<Preparation of mother liquor A5>

The following components were mixed to obtain a mixture.
Ethanol (solvent): 17.82 parts by mass
MKC (registered trademark) silicate MS51 (siloxane oligomer, manufactured by Mitsubishi Chemical Corporation): 0.76 parts by mass
Aluminum chelate D (1 mass% ethanol solution, manufactured by Kawaken Fine Chemicals Co., Ltd., condensation catalyst): 0.12 parts by mass
Further, 23.33 parts by mass of water (solvent) was gradually added to the mixture, and the solution was stirred at room temperature for 24 hours or longer. In this manner, the siloxane oligomer was hydrolyzed, thereby preparing a mother liquor A5.

<Preparation of silica dispersion B5>

Ethanol (solvent): 22.96 parts by mass
DISPERBYK (registered trademark)-2015 (solid content of 40%, manufactured by BYK-Chemi GMbH, dispersant): 1.07 parts by mass
SNOWTEX (registered trademark) OUP (manufactured by Nissan Chemical Corporation, solid content of 15%, silica particle dispersion): 14.23 parts by mass
The above-described components were mixed, thereby preparing a silica dispersion B5.

<Preparation of coating solution 5>

Mother liquor A5 (hydrolyzed solution): 42.02 parts by mass
Water (solvent): 3.42 parts by mass
Ethanol (solvent): 3.12 parts by mass
Diacetone alcohol (solvent): 2.89 parts by mass

Aluminum chelate D (10 mass% ethanol solution, manufactured by Kawaken Fine Chemicals Co., Ltd., condensation catalyst): 2.32 parts by mass
EMALEX 715 (10 mass% aqueous solution, manufactured by Nihon Emulsion Co., Ltd., surfactant): 0.86 parts by mass
Sodium di(2-ethylhexyl)sulfosuccinate (0.2% aqueous solution, manufactured by NOF Corporation, surfactant): 0.88 parts by mass
Silica dispersion B5 (silica particles): 38.26 parts by mass
Polyacrylic acid 250000 (0.1% aqueous solution, manufactured by Wako Pure Chemical Industries, Ltd.): 1.96 parts by mass
1 mass% diluent (water absorption organic polymer) prepared using a mixed solution containing water and ethanol (mass ratio: 1:1) of hydroxyethyl cellulose (4500 mPa·s to 6500 mPa·s, 2% aqueous solution, manufactured by Tokyo Chemical Industries Co., Ltd.): 4.27 parts by mass
The above-described components were mixed, thereby preparing a coating solution 5.

<Preparation of mother liquor A6>

The following components were mixed to obtain a mixture.
Ethanol (solvent): 17.50 parts by mass
MKC (registered trademark) silicate MS51 (siloxane oligomer, manufactured by Mitsubishi Chemical Corporation): 0.75 parts by mass
Aluminum chelate D (1 mass% ethanol solution, manufactured by Kawaken Fine Chemicals Co., Ltd., condensation catalyst): 0.12 parts by mass
Further, 22.91 parts by mass of water (solvent) was gradually added to the mixture, and the solution was stirred at room temperature for 24 hours or longer. In this manner, the siloxane oligomer was hydrolyzed, thereby preparing a mother liquor A6.

<Preparation of silica dispersion B6>

Ethanol (solvent): 22.55 parts by mass
DISPERBYK (registered trademark)-2015 (solid content of 40%, manufactured by BYK-Chemi GMbH, dispersant): 1.05 parts by mass
SNOWTEX (registered trademark) OUP (manufactured by Nissan Chemical Corporation, solid content of 15%, silica particle dispersion): 13.98 parts by mass
The above-described components were mixed, thereby preparing a silica dispersion B6.

<Preparation of coating solution 6>

Mother liquor A6 (hydrolyzed solution): 41.27 parts by mass
Water (solvent): 2.10 parts by mass
Ethanol (solvent): 1.86 parts by mass
Diacetone alcohol (solvent): 2.89 parts by mass
Aluminum chelate D (10 mass% ethanol solution, manufactured by Kawaken Fine Chemicals Co., Ltd., condensation catalyst): 2.28 parts by mass
EMALEX 715 (10 mass% aqueous solution, manufactured by Nihon Emulsion Co., Ltd., surfactant): 0.84 parts by mass
Sodium di(2-ethylhexyl)sulfosuccinate (0.2% aqueous solution, manufactured by NOF Corporation, surfactant): 0.86 parts by mass
Silica dispersion B6 (silica particles): 37.57 parts by mass
Polyacrylic acid 250000 (0.1% aqueous solution, manufactured by Wako Pure Chemical Industries, Ltd.): 1.93 parts by mass
1 mass% diluent (water absorption organic polymer) prepared using a mixed solution containing water and ethanol (mass ratio: 1:1) of hydroxyethyl cellulose (4500 mPa·s to 6500 mPa·s, 2% aqueous solution, manufactured by Tokyo Chemical Industries Co., Ltd.): 8.39 parts by mass
The above-described components were mixed, thereby preparing a coating solution 6.

<Preparation of mother liquor A7>

The following components were mixed to obtain a mixture.
Ethanol (solvent): 16.60 parts by mass
MKC (registered trademark) silicate MS51 (siloxane oligomer, manufactured by Mitsubishi Chemical Corporation): 0.71

parts by mass
Aluminum chelate D (1 mass% ethanol solution, manufactured by Kawaken Fine Chemicals Co., Ltd., condensation catalyst): 0.11 parts by mass
Further, 20.18 parts by mass of water (solvent) was gradually added to the mixture, and the solution was stirred at room temperature for 24 hours or longer. In this manner, the siloxane oligomer was hydrolyzed, thereby preparing a mother liquor A7.

<Preparation of silica dispersion B7>

Ethanol (solvent): 19.76 parts by mass
DISPERBYK (registered trademark)-2015 (solid content of 40%, manufactured by BYK-Chemi GmbH, dispersant): 0.99 parts by mass
SNOWTEX (registered trademark) OUP (manufactured by Nissan Chemical Corporation, solid content of 15%, silica particle dispersion): 13.26 parts by mass
The above-described components were mixed, thereby preparing a silica dispersion B7.

<Preparation of coating solution 7>

Mother liquor A7 (hydrolyzed solution): 37.60 parts by mass
Diacetone alcohol (solvent): 2.89 parts by mass
Aluminum chelate D (10 mass% ethanol solution, manufactured by Kawaken Fine Chemicals Co., Ltd., condensation catalyst): 2.16 parts by mass
EMALEX 715 (10 mass% aqueous solution, manufactured by Nihon Emulsion Co., Ltd., surfactant): 0.80 parts by mass
Sodium di(2-ethylhexyl)sulfosuccinate (0.2% aqueous solution, manufactured by NOF Corporation, surfactant): 0.82 parts by mass
Silica dispersion B7 (silica particles): 34.01 parts by mass
Polyacrylic acid 250000 (0.1% aqueous solution, manufactured by Wako Pure Chemical Industries, Ltd.): 1.83 parts by mass
1 mass% diluent (water absorption organic polymer) prepared using a mixed solution containing water and ethanol (mass ratio: 1:1) of hydroxyethyl cellulose (4500 mPa·s to 6500 mPa·s, 2% aqueous solution, manufactured by Tokyo Chemical Industries Co., Ltd.): 19.89 parts by mass
The above-described components were mixed, thereby preparing a coating solution 7.

<Preparation of mother liquor A8>

The following components were mixed to obtain a mixture.
Ethanol (solvent): 15.91 parts by mass
MKC (registered trademark) silicate MS51 (siloxane oligomer, manufactured by Mitsubishi Chemical Corporation): 0.68 parts by mass
Aluminum chelate D (1 mass% ethanol solution, manufactured by Kawaken Fine Chemicals Co., Ltd., condensation catalyst): 0.10 parts by mass
Further, 16.52 parts by mass of water (solvent) was gradually added to the mixture, and the solution was stirred at room temperature for 24 hours or longer. In this manner, the siloxane oligomer was hydrolyzed, thereby preparing a mother liquor A8.

<Preparation of silica dispersion B8>

Ethanol (solvent): 16.25 parts by mass
DISPERBYK (registered trademark)-2015 (solid content of 40%, manufactured by BYK-Chemi GmbH, dispersant): 0.95 parts by mass
SNOWTEX (registered trademark) OUP (manufactured by Nissan Chemical Corporation, solid content of 15%, silica particle dispersion): 12.71 parts by mass
The above-described components were mixed, thereby preparing a silica dispersion B8.

<Preparation of coating solution 8>

Mother liquor A8 (hydrolyzed solution): 33.22 parts by mass
Diacetone alcohol (solvent): 2.89 parts by mass

Aluminum chelate D (10 mass% ethanol solution, manufactured by Kawaken Fine Chemicals Co., Ltd., condensation catalyst): 2.07 parts by mass
EMALEX 715 (10 mass% aqueous solution, manufactured by Nihon Emulsion Co., Ltd., surfactant): 0.77 parts by mass
Sodium di(2-ethylhexyl)sulfosuccinate (0.2% aqueous solution, manufactured by NOF Corporation, surfactant): 0.78 parts by mass
Silica dispersion B8 (silica particles): 29.91 parts by mass
Polyacrylic acid 250000 (0.1% aqueous solution, manufactured by Wako Pure Chemical Industries, Ltd.): 1.75 parts by mass
1 mass% diluent (water absorption organic polymer) prepared using a mixed solution containing water and ethanol (mass ratio: 1:1) of hydroxyethyl cellulose (4500 mPa·s to 6500 mPa·s, 2% aqueous solution, manufactured by Tokyo Chemical Industries Co., Ltd.): 28.60 parts by mass
The above-described components were mixed, thereby preparing a coating solution 8.

<Preparation of mother liquor A9>

The following components were mixed to obtain a mixture.
Ethanol (solvent): 12.76 parts by mass
MKC (registered trademark) silicate MS51 (siloxane oligomer, manufactured by Mitsubishi Chemical Corporation): 0.65 parts by mass
Aluminum chelate D (1 mass% ethanol solution, manufactured by Kawaken Fine Chemicals Co., Ltd., condensation catalyst): 0.10 parts by mass
Further, 13.18 parts by mass of water (solvent) was gradually added to the mixture, and the solution was stirred at room temperature for 24 hours or longer. In this manner, the siloxane oligomer was hydrolyzed, thereby preparing a mother liquor A9.

<Preparation of silica dispersion B9>

Ethanol (solvent): 23.28 parts by mass
DISPERBYK (registered trademark)-2015 (solid content of 40%, manufactured by BYK-Chemi GMbH, dispersant): 1.08 parts by mass
SNOWTEX (registered trademark) OUP (manufactured by Nissan Chemical Corporation, solid content of 15%, silica particle dispersion): 14.43 parts by mass
The above-described components were mixed, thereby preparing a silica dispersion B9.

<Preparation of coating solution 9>

Mother liquor A9 (hydrolyzed solution) (solvent): 2.90 parts by mass
Aluminum chelate D (10 mass% ethanol solution, manufactured by Kawaken Fine Chemicals Co., Ltd., condensation catalyst): 2.13 parts by mass
EMALEX 715 (10 mass% aqueous solution, manufactured by Nihon Emulsion Co., Ltd., surfactant): 0.79 parts by mass
Sodium di(2-ethylhexyl)sulfosuccinate (0.2% aqueous solution, manufactured by NOF Corporation, surfactant): 0.84 parts by mass
Silica dispersion B9 (silica particles): 28.58 parts by mass
Polyacrylic acid 250000 (0.1% aqueous solution, manufactured by Wako Pure Chemical Industries, Ltd.): 1.80 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 36.28 parts by mass
The above-described components were mixed, thereby preparing a coating solution 9.

<Preparation of mother liquor A17>

The following components were mixed to obtain a mixture.
Ethanol (solvent): 12.50 parts by mass
MKC (registered trademark) silicate MS51 (siloxane oligomer, manufactured by Mitsubishi Chemical Corporation): 0.53 parts by mass
Aluminum chelate D (1 mass% ethanol solution, manufactured by Kawaken Fine Chemicals Co., Ltd., condensation catalyst): 0.08 parts by mass

Further, 16.37 parts by mass of water (solvent) was gradually added to the mixture, and the solution was stirred at room temperature for 24 hours or longer. In this manner, the siloxane oligomer was hydrolyzed, thereby preparing a mother liquor A17.

<Preparation of silica dispersion B17>

Ethanol (solvent): 16.11 parts by mass
DISPERBYK (registered trademark)-2015 (solid content of 40%, manufactured by BYK-Chemi GmbH, dispersant): 0.75 parts by mass
SNOWTEX (registered trademark) OUP (manufactured by Nissan Chemical Corporation, solid content of 15%, silica particle dispersion): 17.67 parts by mass
The above-described components were mixed, thereby preparing a silica dispersion B17.

<Preparation of coating solution 17>

Mother liquor A17 (hydrolyzed solution): 29.49 parts by mass
Water (solvent): 1.42 parts by mass
Ethanol (solvent): 8.62 parts by mass
Diacetone alcohol (solvent): 2.88 parts by mass
Aluminum chelate D (10 mass% ethanol solution, manufactured by Kawaken Fine Chemicals Co., Ltd., condensation catalyst): 1.63 parts by mass
EMALEX 715 (10 mass% aqueous solution, manufactured by Nihon Emulsion Co., Ltd., surfactant): 0.60 parts by mass
Sodium di(2-ethylhexyl)sulfosuccinate (0.2% aqueous solution, manufactured by NOF Corporation, surfactant): 0.62 parts by mass
Silica dispersion B17 (silica particles): 34.52 parts by mass
Polyacrylic acid 250000 (0.1% aqueous solution, manufactured by Wako Pure Chemical Industries, Ltd.): 1.38 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 18.84 parts by mass
The above-described components were mixed, thereby preparing a coating solution 17.

<Preparation of mother liquor A18>

The following components were mixed to obtain a mixture.
Ethanol (solvent): 10.78 parts by mass
MKC (registered trademark) silicate MS51 (siloxane oligomer, manufactured by Mitsubishi Chemical Corporation): 0.46 parts by mass
Aluminum chelate D (1 mass% ethanol solution, manufactured by Kawaken Fine Chemicals Co., Ltd., condensation catalyst): 0.07 parts by mass
Further, 14.12 parts by mass of water (solvent) was gradually added to the mixture, and the solution was stirred at room temperature for 24 hours or longer. In this manner, the siloxane oligomer was hydrolyzed, thereby preparing a mother liquor A18.

<Preparation of silica dispersion B18>

Ethanol (solvent): 13.89 parts by mass
DISPERBYK (registered trademark)-2015 (solid content of 40%, manufactured by BYK-Chemi GmbH, dispersant): 0.65 parts by mass
SNOWTEX (registered trademark) OUP (manufactured by Nissan Chemical Corporation, solid content of 15%, silica particle dispersion): 19.15 parts by mass
The above-described components were mixed, thereby preparing a silica dispersion B18.

<Preparation of coating solution 18>

Mother liquor A18 (hydrolyzed solution): 25.43 parts by mass
Water (solvent): 2.00 parts by mass
Ethanol (solvent): 11.94 parts by mass

Diacetone alcohol (solvent): 2.88 parts by mass
Aluminum chelate D (10 mass% ethanol solution, manufactured by Kawaken Fine Chemicals Co., Ltd., condensation catalyst): 1.41 parts by mass
EMALEX 715 (10 mass% aqueous solution, manufactured by Nihon Emulsion Co., Ltd., surfactant): 0.52 parts by mass
Sodium di(2-ethylhexyl)sulfosuccinate (0.2% aqueous solution, manufactured by NOF Corporation, surfactant): 0.53 parts by mass
Silica dispersion B18 (silica particles): 33.68 parts by mass
Polyacrylic acid 250000 (0.1% aqueous solution, manufactured by Wako Pure Chemical Industries, Ltd.): 1.19 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 20.42 parts by mass
The above-described components were mixed, thereby preparing a coating solution 18.

<Preparation of mother liquor A19>

The following components were mixed to obtain a mixture.
Ethanol (solvent): 21.43 parts by mass
MKC (registered trademark) silicate MS51 (siloxane oligomer, manufactured by Mitsubishi Chemical Corporation): 0.92 parts by mass
Aluminum chelate D (1 mass% ethanol solution, manufactured by Kawaken Fine Chemicals Co., Ltd., condensation catalyst): 0.14 parts by mass
Further, 27.56 parts by mass of water (solvent) was gradually added to the mixture, and the solution was stirred at room temperature for 24 hours or longer. In this manner, the siloxane oligomer was hydrolyzed, thereby preparing a mother liquor A19.

<Preparation of silica dispersion B19>

Ethanol (solvent): 19.45 parts by mass
DISPERBYK (registered trademark)-2015 (solid content of 40%, manufactured by BYK-Chemi GMbH, dispersant): 1.28 parts by mass
SNOWTEX (registered trademark) OUP (manufactured by Nissan Chemical Corporation, solid content of 15%, silica particle dispersion): 9.23 parts by mass
The above-described components were mixed, thereby preparing a silica dispersion B19.

<Preparation of coating solution 19>

Mother liquor A19 (hydrolyzed solution): 50.05 parts by mass
Diacetone alcohol (solvent): 2.90 parts by mass
Aluminum chelate D (10 mass% ethanol solution, manufactured by Kawaken Fine Chemicals Co., Ltd., condensation catalyst): 2.79 parts by mass
EMALEX 715 (10 mass% aqueous solution, manufactured by Nihon Emulsion Co., Ltd., surfactant): 1.03 parts by mass
Sodium di(2-ethylhexyl)sulfosuccinate (0.2% aqueous solution, manufactured by NOF Corporation, surfactant): 1.06 parts by mass
Silica dispersion B19 (silica particles): 29.97 parts by mass
Polyacrylic acid 250000 (0.1% aqueous solution, manufactured by Wako Pure Chemical Industries, Ltd.): 2.36 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 9.85 parts by mass
The above-described components were mixed, thereby preparing a coating solution 19.

<Preparation of mother liquor A20>

The following components were mixed to obtain a mixture.
Ethanol (solvent): 22.45 parts by mass
MKC (registered trademark) silicate MS51 (siloxane oligomer, manufactured by Mitsubishi Chemical Corporation): 0.96 parts by mass

Aluminum chelate D (1 mass% ethanol solution, manufactured by Kawaken Fine Chemicals Co., Ltd., condensation catalyst): 0.15 parts by mass
Further, 28.90 parts by mass of water (solvent) was gradually added to the mixture, and the solution was stirred at room temperature for 24 hours or longer. In this manner, the siloxane oligomer was hydrolyzed, thereby preparing a mother liquor A20.

<Preparation of silica dispersion B20>

Ethanol (solvent): 18.94 parts by mass
DISPERBYK (registered trademark)-2015 (solid content of 40%, manufactured by BYK-Chemi GMbH, dispersant): 1.34 parts by mass
SNOWTEX (registered trademark) OUP (manufactured by Nissan Chemical Corporation, solid content of 15%, silica particle dispersion): 8.12 parts by mass
The above-described components were mixed, thereby preparing a silica dispersion B20.

<Preparation of coating solution 20>

Mother liquor A20 (hydrolyzed solution): 52.45 parts by mass
Diacetone alcohol (solvent): 2.90 parts by mass
Aluminum chelate D (10 mass% ethanol solution, manufactured by Kawaken Fine Chemicals Co., Ltd., condensation catalyst): 2.93 parts by mass
EMALEX 715 (10 mass% aqueous solution, manufactured by Nihon Emulsion Co., Ltd., surfactant): 1.08 parts by mass
Sodium di(2-ethylhexyl)sulfosuccinate (0.2% aqueous solution, manufactured by NOF Corporation, surfactant): 1.11 parts by mass
Silica dispersion B20 (silica particles): 28.40 parts by mass
Polyacrylic acid 250000 (0.1% aqueous solution, manufactured by Wako Pure Chemical Industries, Ltd.): 2.47 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 8.66 parts by mass
The above-described components were mixed, thereby preparing a coating solution 20.

<Preparation of mother liquor A21>

The following components were mixed to obtain a mixture.
Ethanol (solvent): 24.72 parts by mass
MKC (registered trademark) silicate MS51 (siloxane oligomer, manufactured by Mitsubishi Chemical Corporation): 1.06 parts by mass
Aluminum chelate D (1 mass% ethanol solution, manufactured by Kawaken Fine Chemicals Co., Ltd., condensation catalyst): 0.16 parts by mass
Further, 32.43 parts by mass of water (solvent) was gradually added to the mixture, and the solution was stirred at room temperature for 24 hours or longer. In this manner, the siloxane oligomer was hydrolyzed, thereby preparing a mother liquor A21.

<Preparation of silica dispersion B21>

Ethanol (solvent): 17.85 parts by mass
DISPERBYK (registered trademark)-2015 (solid content of 40%, manufactured by BYK-Chemi GMbH, dispersant): 1.48 parts by mass
SNOWTEX (registered trademark) OUP (manufactured by Nissan Chemical Corporation, solid content of 15%, silica particle dispersion): 5.33 parts by mass
The above-described components were mixed, thereby preparing a silica dispersion B21.

<Preparation of coating solution 21>

Mother liquor A21 (hydrolyzed solution): 58.29 parts by mass
Diacetone alcohol (solvent): 2.91 parts by mass
Aluminum chelate D (10 mass% ethanol solution, manufactured by Kawaken Fine Chemicals Co., Ltd., condensation

catalyst): 3.23 parts by mass
EMALEX 715 (10 mass% aqueous solution, manufactured by Nihon Emulsion Co., Ltd., surfactant): 1.19 parts by mass
Sodium di(2-ethylhexyl)sulfosuccinate (0.2% aqueous solution, manufactured by NOF Corporation, surfactant): 1.22 parts by mass
Silica dispersion B21 (silica particles): 24.66 parts by mass
Polyacrylic acid 250000 (0.1% aqueous solution, manufactured by Wako Pure Chemical Industries, Ltd.): 2.73 parts by mass
1 mass% diluent (water absorption organic polymer) prepared using a mixed solution containing water and ethanol (mass ratio: 1:1) of hydroxyethyl cellulose (4500 mPa·s to 6500 mPa·s, 2% aqueous solution, manufactured by Tokyo Chemical Industries Co., Ltd.): 5.68 parts by mass
The above-described components were mixed, thereby preparing a coating solution 21.

<Preparation of mother liquor A22>

The following components were mixed to obtain a mixture.
Ethanol (solvent): 25.22 parts by mass
MKC (registered trademark) silicate MS51 (siloxane oligomer, manufactured by Mitsubishi Chemical Corporation): 1.08 parts by mass
Aluminum chelate D (1 mass% ethanol solution, manufactured by Kawaken Fine Chemicals Co., Ltd., condensation catalyst): 0.17 parts by mass
Further, 33.08 parts by mass of water (solvent) was gradually added to the mixture, and the solution was stirred at room temperature for 24 hours or longer. In this manner, the siloxane oligomer was hydrolyzed, thereby preparing a mother liquor A22.

<Preparation of silica dispersion B22>

Ethanol (solvent): 17.78 parts by mass
DISPERBYK (registered trademark)-2015 (solid content of 40%, manufactured by BYK-Chemi GMbH, dispersant): 1.51 parts by mass
SNOWTEX (registered trademark) OUP (manufactured by Nissan Chemical Corporation, solid content of 15%, silica particle dispersion): 4.71 parts by mass
The above-described components were mixed, thereby preparing a silica dispersion B22.

<Preparation of coating solution 22>

Mother liquor A22 (hydrolyzed solution): 59.54 parts by mass
Diacetone alcohol (solvent): 2.91 parts by mass
Aluminum chelate D (10 mass% ethanol solution, manufactured by Kawaken Fine Chemicals Co., Ltd., condensation catalyst): 3.29 parts by mass
EMALEX 715 (10 mass% aqueous solution, manufactured by Nihon Emulsion Co., Ltd., surfactant): 1.22 parts by mass
Sodium di(2-ethylhexyl)sulfosuccinate (0.2% aqueous solution, manufactured by NOF Corporation, surfactant): 1.24 parts by mass
Silica dispersion B22 (silica particles): 24.00 parts by mass
Polyacrylic acid 250000 (0.1% aqueous solution, manufactured by Wako Pure Chemical Industries, Ltd.): 2.78 parts by mass
1 mass% diluent (water absorption organic polymer) prepared using a mixed solution containing water and ethanol (mass ratio: 1:1) of hydroxyethyl cellulose (4500 mPa·s to 6500 mPa·s, 2% aqueous solution, manufactured by Tokyo Chemical Industries Co., Ltd.): 5.03 parts by mass
The above-described components were mixed, thereby preparing a coating solution 22.

<Preparation of mother liquor A28>

The following components were mixed to obtain a mixture.
Ethanol (solvent): 15.30 parts by mass
MKC (registered trademark) silicate MS51 (siloxane oligomer, manufactured by Mitsubishi Chemical Corporation): 0.78 parts by mass
Aluminum chelate D (1 mass% ethanol solution, manufactured by Kawaken Fine Chemicals Co., Ltd., condensation catalyst): 0.12 parts by mass

Further, 15.81 parts by mass of water (solvent) was gradually added to the mixture, and the solution was stirred at room temperature for 24 hours or longer. In this manner, the siloxane oligomer was hydrolyzed, thereby preparing a mother liquor A28.

<Preparation of silica dispersion B28>

Ethanol (solvent): 18.68 parts by mass
DISPERBYK (registered trademark)-2015 (solid content of 40%, manufactured by BYK-Chemi GMbH, dispersant): 1.09 parts by mass
SNOWTEX (registered trademark) OUP (manufactured by Nissan Chemical Corporation, solid content of 15%, silica particle dispersion): 14.50 parts by mass
The above-described components were mixed, thereby preparing a silica dispersion B28.

<Preparation of coating solution 28>

Mother liquor A28 (hydrolyzed solution): 32.00 parts by mass
Water (solvent): 12.37 parts by mass
Ethanol (solvent): 11.51 parts by mass
Diacetone alcohol (solvent): 2.89 parts by mass
Aluminum chelate D (10 mass% ethanol solution, manufactured by Kawaken Fine Chemicals Co., Ltd., condensation catalyst): 2.27 parts by mass
EMALEX 715 (10 mass% aqueous solution, manufactured by Nihon Emulsion Co., Ltd., surfactant): 0.79 parts by mass
Sodium di(2-ethylhexyl)sulfosuccinate (0.2% aqueous solution, manufactured by NOF Corporation, surfactant): 0.84 parts by mass
Silica dispersion B28 (silica particles): 34.27 parts by mass
Polyacrylic acid 250000 (0.1% aqueous solution, manufactured by Wako Pure Chemical Industries, Ltd.): 1.92 parts by mass
5 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 1.09 parts by mass
The above-described components were mixed, thereby preparing a coating solution 28.

<Preparation of mother liquor A29>

The following components were mixed to obtain a mixture.
Ethanol (solvent): 9.90 parts by mass
MKC (registered trademark) silicate MS51 (siloxane oligomer, manufactured by Mitsubishi Chemical Corporation): 0.50 parts by mass
Aluminum chelate D (1 mass% ethanol solution, manufactured by Kawaken Fine Chemicals Co., Ltd., condensation catalyst): 0.08 parts by mass
Further, 4.47 parts by mass of water (solvent) was gradually added to the mixture, and the solution was stirred at room temperature for 24 hours or longer. In this manner, the siloxane oligomer was hydrolyzed, thereby preparing a mother liquor A29.

<Preparation of silica dispersion B29>

Ethanol (solvent): 7.57 parts by mass
DISPERBYK (registered trademark)-2015 (solid content of 40%, manufactured by BYK-Chemi GMbH, dispersant): 0.70 parts by mass
SNOWTEX (registered trademark) OUP (manufactured by Nissan Chemical Corporation, solid content of 15%, silica particle dispersion): 9.39 parts by mass
The above-described components were mixed, thereby preparing a silica dispersion B29.

<Preparation of coating solution 29>

Mother liquor A29 (hydrolyzed solution): 14.95 parts by mass
Diacetone alcohol (solvent): 2.84 parts by mass
Aluminum chelate D (10 mass% ethanol solution, manufactured by Kawaken Fine Chemicals Co., Ltd., condensation

catalyst): 3.36 parts by mass
EMALEX 715 (10 mass% aqueous solution, manufactured by Nihon Emulsion Co., Ltd., surfactant): 1.24 parts by mass
Sodium di(2-ethylhexyl)sulfosuccinate (0.2% aqueous solution, manufactured by NOF Corporation, surfactant): 0.82 parts by mass
Silica dispersion B29 (silica particles): 17.66 parts by mass
Polyacrylic acid 250000 (0.1% aqueous solution, manufactured by Wako Pure Chemical Industries, Ltd.): 2.83 parts by mass
1 mass% diluent (water absorption organic polymer) prepared using a mixed solution containing water and ethanol (mass ratio: 1:1) of hydroxyethyl cellulose (4500 mPa·s to 6500 mPa·s (2% aqueous solution), manufactured by Tokyo Chemical Industries Co., Ltd.): 56.31 parts by mass
The above-described components were mixed, thereby preparing a coating solution 29.

<Preparation of coating solutions 2, 23, 24, and 25>

Coating solutions 2, 23, 24, and 25 were obtained by performing the same preparation as that for the coating solution 1 except that the hydroxyethyl cellulose in the coating solution 1 was changed to polyvinylpyrrolidone (PVP, manufactured by Tokyo Chemical Industries Co., Ltd., coating solution 2), polyethylene glycol 500000 (PEG, manufactured by Wako Pure Chemical Industries, Ltd., coating solution 23), hydroxypropyl cellulose (HPC, 1000 mPa·s to 4000 mPa·s (2% aqueous solution), manufactured by Tokyo Chemical Industries Co., Ltd, coating solution 24), or a vinyl acetate polymer (PVAc, manufactured by Wako Pure Chemical Industries, Ltd., coating solution 25), thereby obtaining the coating solutions 2, 23, 24, and 25.

<Preparation of coating solutions 10 to 16>

Coating solutions 10 to 16 were obtained by performing the same preparation as that for the coating solution 1 except that SNOWTEX OUP in the coating solution 1 was changed to SNOWTEX ST-PS-SO (solid content of 15%, necklace-shaped silica particle dispersion, manufactured by Nissan Chemical Corporation, coating solution 10), SNOWTEX ST-PS-MO (solid content of 18%, necklace-shaped silica particle dispersion, manufactured by Nissan Chemical Corporation, coating solution 11), SNOWTEX ST-OS (solid content of 20%, spherical silica particle dispersion, manufactured by Nissan Chemical Corporation, coating solution 12), SNOWTEX ST-OXS (solid content of 10%, spherical silica particle dispersion, manufactured by Nissan Chemical Corporation, coating solution 13), SNOWTEX ST-O (solid content of 20%, spherical silica particle dispersion, manufactured by Nissan Chemical Corporation, coating solution 14), SNOWTEX O-40 (solid content of 40%, spherical silica particle dispersion, manufactured by Nissan Chemical Corporation, coating solution 15), or SNOWTEX OYL (solid content of 20%, spherical silica particle dispersion, manufactured by Nissan Chemical Corporation, coating solution 16), and the amount of ethanol was adjusted such that the solid content of the silica dispersion became equal to that of the silica dispersion B1, thereby obtaining the coating solutions 10 to 16.

<Preparation of coating solutions 26 and 27>

Coating solutions 26 and 27 were obtained by performing the same preparation as that for the coating solution 1 except that aluminum chelate D in the coating solution 1 was not added (coating solution 26) or diacetone alcohol was not added (coating solution 27), thereby obtaining the coating solutions 26 and 27.

<Preparation of coating solution 30>

A coating solution 30 was obtained by performing the same preparation as that for the coating solution 1 except that the hydroxyethyl cellulose in the coating solution 1 was not added, thereby obtaining the coating solution 30.

<Preparation of coating solution 31>

A coating solution 31 was prepared with reference to Example 1 described in JP2001-254072A.

Specifically, silica sol (COLCOAT 6P, manufactured by Nippon Soda Co., Ltd.), zirconia (zirconium chloride reagent, manufactured by Kishida Chemical Co., Ltd.), ultrafine particle silica (IPA-ST-S, manufactured by Nissan Chemical Corporation), a solvent (EKINEN F-1, modified alcohol)), and hydrochloric acid (reagent, manufactured by Kishida Chemical Co., Ltd.) as a catalyst were used. The solution was prepared according to the following procedures. As the composition, 20% by mass of silica, 20% by mass of zirconia, and 60% by mass of ultrafine particle silica in terms of the oxide were prepared, predetermined amounts of COLCOAT 6P, zirconium chloride, IPA-ST-S, EKINEN F-1, and hydrochloric acid were sequentially added, and the solution was stirred at room temperature, thereby obtaining the

coating solution 31. Further, the concentration of solid contents of the coating solution 31 was 4% by mass in terms of the total oxide.

<Preparation of coating solution 32>

A coating solution 32 was prepared by performing addition to the coating solution 25 such that A/B was set to 2.0 using a 1 mass% diluent prepared using a mixed solution containing water and ethanol (mass ratio: 1:1) of hydroxypropyl cellulose (1000 mPa·s to 4000 mPa·s (2% aqueous solution), manufactured by Tokyo Chemical Industries Co., Ltd.).

<Preparation of coating solution 33>

A coating solution 33 was prepared with reference to Reference Example 1 described in JP2009-054348A.

Specifically, a reaction container comprising a thermometer, a stirrer, a nitrogen introduction pipe, and a cooling pipe was charged with 50 g of isopropanol as an organic solvent, 80 g of N,N-dimethylacrylamide, 5 g of methyl methacrylate, and 1.5 g of N-methylolacrylamide, and the solution was heated to 65°C while nitrogen gas was blown thereto. Here, as a radical polymerization initiator, a solution obtained by dissolving 0.27 g of a hydrocarbon diluted product (PEROYL 355(S), manufactured by NOF Corporation) of 3,5,5-trimethylhexanoyl peroxide in 30 g of isopropanol was added dropwise for 1 hour. Simultaneously, a solution obtained by dissolving 15 g of methyl methacrylate in 150 g of isopropanol was added dropwise for 3 hours. Further, polymerization was performed for 6 hours, the resulting solution was heated to 80°C, and polymerization was performed at this temperature for 1 hour, thereby obtaining a random copolymer solution.

27.7 g of isopropanol, 30 g of methyl ethyl ketone, and 10 g of 3-methoxy-3-methyl-1-butanol [SORFIT (trade name), manufactured by Kuraray Co., Ltd.] were added to 32.3 g of the random copolymer solution, the solid content therein was adjusted to 10% by mass, and 0.2 g of p-toluenesulfonic acid as a curing catalyst and 0.1 g of polyether-modified polydimethylsiloxane (BYK302, manufactured by BYK-Chemi GMbH) as a leveling agent were mixed, thereby obtaining the coating solution 33.

(Examples 1 to 32 and Comparative Examples 1 to 6)

<Preparation of laminate>

Each base material listed in Table 2 or Table 3 shown below was coated with each coating solution (anti-fogging coating composition) listed in Table 2 or Table 3 shown below using a spray gun (form: W-101-101G, Anest Iwata Corporation). After the base material was coated with the coating solution, the base material was allowed to stand at 25°C for 1 minute. After the base material was allowed to stand, the applied coating solution was heated at 120°C for 20 minutes and then dried to prepare a laminate comprising an anti-fogging layer having a film thickness listed in Table 2 or 3 shown below, on the base material.

The details of the used base materials are as follows.

Polymethyl methacrylate substrate (PMMA, trade name: COMOGLAS (registered trademark) CG P, thickness: 1 mm, size: 10 cm × 10 cm, manufactured by Kuraray Co., Ltd.)
Polycarbonate substrate (PC, trade name: CARBON GLASS (registered trademark) C-110, thickness: 0.5 mm, size: 10 cm × 10 cm, manufactured by AGC Inc.)
Glass substrate (non-alkali glass, trade name: OA-10, thickness: 1 mm, size: 10 cm × 10 cm, manufactured by Nippon Electric Glass Company, Ltd.)
Polyethylene terephthalate substrate (PET, trade name: LUMIRROR (registered trademark) T60, thickness: 0.25 mm, size: 10 cm × 10 cm, manufactured by Toray Industries, Inc.)

The formulations and the like of the coating solutions (anti-fogging coating compositions) and the laminates prepared in the above-described manners are listed in Table 2 and Table 3.

The "ratio (% by mass)" in Table 2 and Table 3 indicates the proportion with respect to the total mass of the solvents contained in the coating solution (anti-fogging coating composition).

In the columns of the formations in Table 2 and Table 3, "-" indicates that the corresponding components were not blended.

[Table 2]

| | Base material | Coating solution | Siloxane binder | Silica particles | | | Water absorption organic polymer | | Other components | | Solvent composition | | | Anti-fogging layer | | | | |
|---|---|---|---|---|---|---|---|---|---|---|---|---|---|---|---|---|---|---|
| | | | | Type | Average primary particle diameter | Content ratio (total solid content ratio) | Type | SP value ($MPa^{1/2}$) | Type | Content ratio (total solid content ratio) | Ethanol | Water | Diacetone alcohol | Content of A/B | Content of C/B | Water absorption amount ($mg/cm^2$) | Contact angle | Film thickness |
| Example 1 | PMMA | Coating solution 1 | MS51 | Chain-like | 12nm | 56% | HEC | 31.2 | Aluminum chelate | 6.10% | 49.40% | 47.60% | 3.00% | 0.070 | 0.360 | 2.5 | 8° | 2.5μm |
| Example 2 | PMMA | Coating solution 2 | MS51 | Chain-like | 12nm | 56% | PVP | 25.6 | Aluminum chelate | 6.10% | 49.40% | 47.60% | 3.00% | 0.070 | 0.360 | 2.5 | 8° | 2.5μm |
| Example 3 | PC | Coating solution 1 | MS51 | Chain-like | 12nm | 56% | HEC | 31.2 | Aluminum chelate | 6.10% | 49.40% | 47.60% | 3.00% | 0.070 | 0.360 | 2.6 | 8° | 2.5μm |
| Example 4 | PMMA | Coating solution 1 | MS51 | Chain-like | 12nm | 56% | HEC | 31.2 | Aluminum chelate | 6.10% | 49.40% | 47.60% | 3.00% | 0.070 | 0.360 | 14 | 8° | 10μm |
| Example 5 | PMMA | Coating solution 1 | MS51 | Chain-like | 12nm | 56% | HEC | 31.2 | Aluminum chelate | 6.10% | 49.40% | 47.60% | 3.00% | 0.070 | 0.360 | 1.5 | 8° | 1.3μm |
| Example 6 | PMMA | Coating solution 3 | KBE-04 +KBE-403 | Chain-like | 12nm | 56% | HEC | 31.2 | Aluminum chelate | 6.10% | 49.40% | 47.60% | 3.00% | 0.070 | 0.360 | 2.5 | 9° | 2.5μm |
| Example 7 | PMMA | Coating solution 4 | MS51 | Chain-like | 12nm | 58% | HEC | 31.2 | Aluminum chelate | 6.10% | 49.40% | 47.60% | 3.00% | 0.010 | 0.360 | 1.5 | 9° | 2.5μm |
| Example 8 | PMMA | Coating solution 5 | MS51 | Chain-like | 12nm | 58% | HEC | 31.2 | Aluminum chelate | 6.10% | 49.40% | 47.60% | 3.00% | 0.020 | 0.360 | 1.5 | 9° | 2.5μm |

(continued)

| | Base material | Coating solution | Siloxane binder | Silica particles | | | Water absorption organic polymer | | Other components | | Solvent composition | | | Anti-fogging layer | | | | |
|---|---|---|---|---|---|---|---|---|---|---|---|---|---|---|---|---|---|---|
| | | | | Type | Average primary particle diameter | Content ratio (total solid content ratio) | Type | SP value ($MPa^{1/2}$) | Type | Content ratio (total solid content ratio) | Ethanol | Water | Diacetone alcohol | Content of A/B | Content of C/B | Water absorption amount ($mg/cm^2$) | Contact angle | Film thickness |
| Example 9 | PMMA | Coating solution 6 | MS51 | Chain-like | 12nm | 57% | HEC | 31.2 | Aluminum chelate | 6.10% | 49.40% | 47.60% | 3.00% | 0.040 | 0.360 | 1.8 | 9° | 2.5μm |
| Example 10 | PMMA | Coating solution 7 | MS51 | Chain-like | 12nm | 55% | HEC | 31.2 | Aluminum chelate | 6.10% | 49.40% | 47.60% | 3.00% | 0.100 | 0.360 | 2.8 | 10° | 2.5μm |
| Example 11 | PMMA | Coating solution 8 | MS51 | Chain-like | 12nm | 54% | HEC | 31.2 | Aluminum chelate | 6.10% | 49.40% | 47.60% | 3.00% | 0.150 | 0.360 | 3.0 | 12° | 2.5μm |
| Example 12 | PMMA | Coating solution 9 | MS51 | Chain-like | 12nm | 52% | HEC | 31.2 | Aluminum chelate | 6.10% | 49.40% | 47.60% | 3.00% | 0.200 | 0.360 | 3.2 | 14° | 2.5μm |
| Example 13 | PMMA | Coating solution 10 | MS51 | Necklace-shaped | 14nm | 56% | HEC | 31.2 | Aluminum chelate | 6.10% | 49.40% | 47.60% | 3.00% | 0.070 | 0.360 | 2.8 | 7° | 2.5μm |
| Example 14 | PMMA | Coating solution 11 | MS51 | Necklace-shaped | 22nm | 56% | HEC | 31.2 | Aluminum chelate | 6.10% | 49.40% | 47.60% | 3.00% | 0.070 | 0.360 | 3.0 | 8° | 2.5μm |
| Example 15 | PMMA | Coating solution 12 | MS51 | Spherical | 9nm | 56% | HEC | 31.2 | Aluminum chelate | 6.10% | 49.40% | 47.60% | 3.00% | 0.070 | 0.360 | 1.8 | 11° | 2.5μm |

(continued)

| | | | | Silica particles | | | Water absorption organic polymer | | Other components | | Solvent composition | | | Anti-fogging layer | | | | |
|---|---|---|---|---|---|---|---|---|---|---|---|---|---|---|---|---|---|---|
| | Base material | Coating solution | Siloxane binder | Type | Average primary particle diameter | Content ratio (total solid content ratio) | Type | SP value ($MPa^{1/2}$) | Type | Content ratio (total solid content ratio) | Ethanol | Water | Diacetone alcohol | Content of A/B | Content of C/B | Water absorption amount ($mg/cm^2$) | Contact angle | Film thickness |
| Example 16 | PMMA | Coating solution 13 | MS51 | Spherical | 5nm | 56% | HEC | 31.2 | Aluminum chelate | 6.10% | 49.40% | 47.60% | 3.00% | 0.070 | 0.360 | 1.6 | 11° | 2.5μm |
| Example 17 | PMMA | Coating solution 14 | MS51 | Spherical | 12nm | 56% | HEC | 31.2 | Aluminum chelate | 6.10% | 49.40% | 47.60% | 3.00% | 0.070 | 0.360 | 2.0 | 9° | 2.5μm |
| Example 18 | PMMA | Coating solution 15 | MS51 | Spherical | 22nm | 56% | HEC | 31.2 | Aluminum chelate | 6.10% | 49.40% | 47.60% | 3.00% | 0.070 | 0.360 | 2.4 | 11° | 2.5μm |
| Example 19 | PMMA | Coating solution 16 | MS51 | Spherical | 65nm | 56% | HEC | 31.2 | Aluminum chelate | 6.10% | 49.40% | 47.60% | 3.00% | 0.070 | 0.360 | 4.2 | 11° | 2.5μm |

[Table 3]

| | Base material | Coating solution | Siloxane binder | Silica particles | | | Water absorption organic polymer | | Other components | | Solvent composition | | | Anti-fogging layer | | | | |
|---|---|---|---|---|---|---|---|---|---|---|---|---|---|---|---|---|---|---|
| | | | | Type | Average primary particle diameter | Content ratio (total solid content ratio) | Type | SP value ($MPa^{1/2}$) | Type | Content ratio (total solid content ratio) | Ethanol | Water | Diacetone alcohol | Content of A/B | Content of C/B | Water absorption amount ($mg/cm^2$) | Contact angle | Film thickness |
| Example 20 | PMMA | Coating solution 17 | MS51 | Chain-like | 12nm | 68% | HEC | 31.2 | Aluminum chelate | 6.10% | 49.40% | 47.60% | 3.00% | 0.070 | 0.200 | 2.9 | 7° | 2.5μm |
| Example 21 | PMMA | Coating solution 18 | MS51 | Chain-like | 12nm | 72% | HEC | 31.2 | Aluminum chelate | 6.10% | 49.40% | 47.60% | 3.00% | 0.070 | 0.160 | 3.1 | 8° | 2.5μm |
| Example 22 | PMMA | Coating solution 19 | MS51 | Chain-like | 12nm | 42% | HEC | 31.2 | Aluminum chelate | 6.10% | 49.40% | 47.60% | 3.00% | 0.070 | 0.660 | 2.2 | 10° | 2.5μm |
| Example 23 | PMMA | Coating solution 20 | MS51 | Chain-like | 12nm | 38% | HEC | 31.2 | Aluminum chelate | 6.10% | 49.40% | 47.60% | 3.00% | 0.070 | 0.790 | 2.1 | 11° | 2.5μm |
| Example 24 | PMMA | Coating solution 21 | MS51 | Chain-like | 12nm | 27% | HEC | 31.2 | Aluminum chelate | 6.10% | 49.40% | 47.60% | 3.00% | 0.070 | 1.320 | 1.5 | 10° | 2.5μm |
| Example 25 | PMMA | Coating solution 22 | MS51 | Chain-like | 12nm | 24% | HEC | 31.2 | Aluminum chelate | 6.10% | 49.40% | 47.60% | 3.00% | 0.070 | 1.520 | 1.5 | 11° | 2.5μm |
| Example 26 | PMMA | Coating solution 23 | MS51 | Chain-like | 12nm | 56% | PEG | 19.4 | Aluminum chelate | 6.10% | 49.40% | 47.60% | 3.00% | 0.070 | 0.360 | 1.8 | 15° | 2.5μm |
| Example 27 | PMMA | Coating solution 24 | MS51 | Chain-like | 12nm | 56% | HPC | 23.8 | Aluminum chelate | 6.10% | 49.40% | 47.60% | 3.00% | 0.070 | 0.360 | 1,9 | 15° | 2.5μm |
| Example 28 | PMMA | Coating solution 25 | MS51 | Chain-like | 12nm | 56% | PVAc | 19.6 | Aluminum chelate | 6.10% | 49.40% | 47.60% | 3.00% | 0.070 | 0.360 | 1.8 | 15° | 2.5μm |
| Example 29 | Glass | Coating solution 1 | MS51 | Chain-like | 12nm | 56% | HEC | 31.2 | Aluminum chelate | 6.10% | 49.40% | 47.60% | 3.00% | 0.070 | 0.360 | 2.5 | 9° | 2.5μm |
| Example 30 | PET | Coating solution 1 | MS51 | Chain-like | 12nm | 56% | HEC | 31.2 | Aluminum chelate | 6.10% | 49.40% | 47.60% | 3.00% | 0.070 | 0.360 | 2.4 | 8° | 2.5μm |
| Example 31 | PMMA | Coating solution 26 | MS51 | Chain-like | 12nm | 56% | HEC | 31.2 | - | - | 49.40% | 47.60% | 3.00% | 0.070 | 0.360 | 2.5 | 8° | 2.5μm |
| Example 32 | PMMA | Coating solution 27 | MS51 | Chain-like | 12nm | 56% | HEC | 31.2 | Aluminum chelate | 6.10% | 52.40% | 47.60% | - | 0.070 | 0.360 | 2.5 | 8° | 2.5μm |
| Comparative Example 1 | PMMA | Coating solution 28 | MS51 | Chain-like | 12nm | 56% | HEC | 31.2 | Aluminum chelate | 6.10% | 49.40% | 47.60% | 3.00% | 0.005 | 0.360 | 1.3 | 9° | 2.5μm |
| Comparative Example 2 | PMMA | Coating solution 29 | MS51 | Chain-like | 12nm | 26% | HEC | 31.2 | Aluminum chelate | 6.10% | 49.40% | 47.60% | 3.00% | 2.000 | 0.360 | 26 | 23° | 10μm |
| Comparative Example 3 | PMMA | Coating solution 30 | MS51 | Chain-like | 12nm | 65% | - | - | Aluminum chelate | 6.10% | 49.40% | 47.60% | 3.00% | - | - | O,7 | 8° | 2.5μm |
| Comparative Example 4 | Glass | Coating solution 31 | COLCOAT 6P | Spherical | 13nm | 60% | - | - | - | - | - | - | - | - | - | 0.3 | 8° | 0.2μm |
| Comparative Example 5 | Glass | Coating solution 32 | COLCOAT 6P | Spherical | 13nm | 26% | HPC | 23.8 | - | - | - | - | - | 2.000 | 0.360 | 17 | 25° | 2.5μm |
| Comparative Example 6 | PMMA | Coating solution 33 | - | - | - | - | Acrylic copolymer | - | - | - | - | - | - | - | - | 2.3 | 26° | 2.0μm |

[Evaluation]

The following performance evaluations were performed using the coating solutions (anti-fogging coating compositions) and the laminates prepared in the above-described manner. The results are listed in Table 4.

1. Contact angle of anti-fogging layer

1 μL of pure water was dropped on the surface of the film under a condition of an ambient temperature of 25°C, and the contact angle (unit: °) was measured five times according to the θ/2 method. The average value of the obtained measured values was set as the water contact angle. Further, as a measuring device, a fully automatic contact angle meter (model number: DM-701, manufactured by Kyowa Interface Science, Inc.) was used.
As the value of the contact angle of the film decreases, this indicates that the film has excellent hydrophilicity and anti-fogging properties.

2. Water absorption amount of anti-fogging layer

The mass of the laminate was measured, and the obtained measured value was set as the "initial mass". Next, a hot water bath at 60°C was prepared, and the steam of the hot water bath was applied to only an area of 5 $cm^2$ in the film of the laminate in a state in which the distance between the water surface of the hot water bath and the film was maintained to 5 cm under conditions of an ambient temperature of 25°C and a relative humidity of 50%. After the steam was applied to the film to the extent that water drip did not occur in a case where the laminate was tilted perpendicularly, the mass of the laminate was measured and the obtained measured value was set as the "mass after the test". The amount of increase in mass due to the test was calculated based on the initial mass and the mass after the test to acquire the mass per unit area to which the steam had been applied, and the mass was set as the water absorption amount (unit: $mg/cm^2$).
As the water absorption amount increases, the film tends to be swollen.

3. Anti-fogging properties

A hot water bath at 40°C was prepared, and the steam of the hot water bath was applied to only an area of 5 $cm^2$ in the film of the laminate for 1 minute in a state in which the distance between the water surface of the hot water bath and the film was maintained to 5 cm under conditions of an ambient temperature of 25°C and a relative humidity of 50%. Thereafter, the anti-fogging properties were evaluated by visually observing the appearance.
In the evaluation standards described below, "A" and "B" are in practically acceptable levels.

A: Fog was not found and the transmission image which was able to be observed through the laminate was not distorted at all.
B: Fog was not found and the transmission image which was able to be observed through the laminate was distorted.
C: Fog was found.

4. Water drip trace suppressibility

A hot water bath at 60°C was prepared, and the steam of the hot water bath was applied to only an area of 5 $cm^2$ in the film of the laminate for 2 minutes in a state in which the distance between the water surface of the hot water bath and the film was maintained to 5 cm under conditions of an ambient temperature of 25°C and a relative humidity of 50%. Thereafter, the laminate was held perpendicularly, and water droplets were dropped by the own weight thereof. Next, the laminate was naturally dried, and the water drip properties were evaluated by visually observing the appearance.
In the evaluation standards described below, "A", "B", and "C" are in practically acceptable levels.

A: Water drip traces were not found at all.
B: The contour of water drip traces was slightly found.
C: The contour of water drip traces was found.
D: The contour of water drip traces was found and water droplet traces were found.

5. Crack (crack suppressibility)

With regard to the occurrence of cracks of the laminate, crack properties thereof were evaluated by visually observing the appearance.

In the evaluation standards described below, "A", "B", and "C" are in practically acceptable levels.

A: Cracks were not found at all.
B: 10 or less cracks were found in the peripheral portion of the anti-fogging layer.
C: 30 or less cracks were found in the peripheral portion of the anti-fogging layer.
D: Cracks were found in the central portion of the anti-fogging layer.

6. Adhesiveness between base material and anti-fogging layer (adhesiveness to base material)

The adhesiveness between the base material and the anti-fogging layer was evaluated based on the following evaluation standards by performing a cross hatch test on the anti-fogging layer in conformity with JIS (Japanese Industrial Standard) K5600 (crosscut method). In this cross hatch test, the cut interval was set to 2 mm, and twenty five square lattices respectively with a size of 2 $mm^2$ were formed.
In the evaluation standards described below, "A", "B", and "C" are in practically acceptable levels.

A: Peeling was not found at all.
B: Peeling was found only on the cut lines.
C: Peeling of one to five lattices was found.
D: Peeling of five or more lattices was found.

7. Haze (transparency)

The haze of the laminate was measured using a haze meter (model number: NDH 5000, manufactured by Nippon Denshoku Industries Co., Ltd.), and the obtained measured value was used as an index for evaluating the transparency. In order to eliminate the difference due to the base material, the haze value was calculated by subtracting the haze value of only the base material from the measured value of the laminate. The measurement was performed by directing the base material surface of the laminate, in other words, the surface on a side opposite to the surface on which the film of the laminate was formed, to a light source.
In the present evaluation test, as the measured value of the haze decreases, this indicates that the laminate has excellent transparency. Further, in a case where the transparency of the laminate is excellent, this indicates that the transparency of the film is excellent.
In the evaluation standards described below, "A", "B", and "C" are in practically acceptable levels.

A: The haze was less than 0.8%.
B: The haze was 0.8% or more and less than 1.2%.
C: The haze was 1.2% or more and less than 1.6%.
D: The haze was 1.6% or more and less than 2.0%.

8. Stain resistance

110 mL of a screw tube bottle was filled with 3 mL of silicone oil TSF458-100 (manufactured by Momentive Performance Materials Inc.), and the bottle was sealed by directing the anti-fogging layer surface of the laminate to the inside of the screw tube. This sealed screw bottle was placed on a hot plate whose temperature was held at 130°C and was allowed to stand for 24 hours. After the stand, the laminate was taken out, and the anti-fogging properties of the film were evaluated according to the same method as in the evaluation of the anti-fogging properties described above. The evaluation of the stain resistance was performed based on the following evaluation standards.
As the anti-fogging properties of the laminate after the stand are excellent, this indicates that the laminate has excellent stain resistance against silicone gas.
In the evaluation standards described below, "A", "B", and "C" are in practically acceptable levels.

A: Fog was not found and the transmission image which was able to be observed through the laminate was not distorted at all.
B: Fog was not found and the transmission image which was able to be observed through the laminate was slightly distorted.
C: Fog was not found and the transmission image which was able to be observed through the laminate was distorted.
D: Fog was found.

[Table 4]

| | Anti-fogging properties | Stain resistance | Water drip trace suppressibility | Crack | Haze | Adhesiveness to base material |
|---|---|---|---|---|---|---|
| Example 1 | A | A | A | A | A | A |
| Example 2 | A | A | A | A | A | A |
| Example 3 | A | A | A | A | A | A |
| Example 4 | A | A | C | A | B | A |
| Example 5 | A | B | A | A | A | A |
| Example 6 | A | A | A | A | A | A |
| Example 7 | A | B | A | B | A | A |
| Example 8 | A | B | A | A | A | A |
| Example 9 | A | A | A | A | A | A |
| Example 10 | A | A | A | A | A | A |
| Example 11 | A | A | B | A | B | A |
| Example 12 | B | A | B | A | B | A |
| Example 13 | A | A | A | A | A | B |
| Example 14 | A | A | A | A | B | B |
| Example 15 | A | B | B | A | A | B |
| Example 16 | A | B | B | A | A | B |
| Example 17 | A | A | B | A | A | B |
| Example 18 | A | A | A | A | B | B |
| Example 19 | A | A | A | A | C | B |
| Example 20 | A | A | A | B | A | B |
| Example 21 | A | A | A | C | A | B |
| Example 22 | A | B | A | A | A | A |
| Example 23 | A | C | A | A | A | A |
| Example 24 | A | C | A | A | A | A |
| Example 25 | B | C | A | A | A | A |
| Example 26 | B | B | A | A | A | A |
| Example 27 | B | B | A | A | A | A |
| Example 28 | B | B | A | A | A | A |
| Example 29 | A | A | A | A | A | A |
| Example 30 | A | A | A | A | B | A |
| Example 31 | A | A | A | B | A | A |
| Example 32 | A | A | A | B | A | C |
| Comparative Example 1 | A | D | A | C | A | A |
| Comparative Example 2 | B | A | D | A | D | A |
| Comparative Example 3 | A | D | A | D | A | D |

(continued)

| | Anti-fogging properties | Stain resistance | Water drip trace suppressibility | Crack | Haze | Adhesiveness to base material |
|---|---|---|---|---|---|---|
| Comparative Example 4 | A | D | A | A | A | A |
| Comparative Example 5 | B | A | D | A | D | A |
| Comparative Example 6 | B | A | D | A | A | A |

As listed in Table 4, in each of the laminates of Examples 1 to 32, the stain resistance and the water drip trace suppressibility of the surface of the anti-fogging layer were excellent. Further, each of the laminates of Examples 1 to 32 had excellent anti-fogging properties, crack suppressibility, transparency, and adhesiveness between the base material and the anti-fogging layer.

Further, the swelling ratio of the anti-fogging layer in each laminate of Examples 1 to 32 was in a range of 3% to 21%.

(Example 33)

[Application to monitoring camera cover]

The inner surface of a housing replacement cover RCP7C used in an outdoor come housing A-ODP7C1A for a network camera (manufactured by Sony Corporation) was coated with each of the anti-fogging coating compositions (coating solutions 1 to 27) using a spray gun (form: W-101-101G, Anest Iwata Corporation). Next, the applied coating solution was dried at 120°C for 20 minutes to obtain a camera cover whose inner surface was covered with a film (thickness of the dried film: 100 μm). Next, a hot water bath at 60°C was prepared, and the steam of the hot water bath was applied to the inner surface covered with the film of the obtained camera cover for 2 minutes in a state in which the distance between the water surface of the hot water bath and the inner surface thereof was maintained to 5 cm.

Further, as a comparative test, the steam was applied according to the same method to the inner surface of the housing replacement cover RCP7C on which a film had not been formed using the coating solution.

As a result, fog occurred in the inner surface of the camera cover on which a film had not been formed. On the contrary, fog did not occur in the inner surface of the camera cover on which a film had been formed. Therefore, it was found that films (anti-fogging layers) exhibiting excellent anti-fogging properties were able to be formed in a case of using the coating solutions 1 to 27.

(Example 34)

Each camera cover whose inner surface of the housing replacement cover RCP7C was covered with a film was obtained in the same manner as in Example 33 except that the thickness of the dried film was set to 3 μm using each of the coating solutions 1 to 27. Next, a hot water bath at 60°C was prepared, and the steam of the hot water bath was applied to the inner surface covered with the film of the obtained camera cover for 2 minutes in a state in which the distance between the water surface of the hot water bath and the inner surface thereof was maintained to 5 cm.

As a result, fog did not occur in the inner surface of the camera cover on which a film had been formed. Therefore, it was found that films (anti-fogging layers) exhibiting excellent anti-fogging properties were able to be formed in a case of using the coating solutions 1 to 27.

(Example 35)

The inner surface of a housing replacement cover (trade name: BKC-13L, manufactured by Placo Co., Ltd.) was coated with each of the anti-fogging coating compositions (coating solutions 1 to 27) using a spray gun (form: W-101-101G, Anest Iwata Corporation). Next, the applied coating solution was dried at 80°C for 10 minutes to obtain a camera cover whose inner surface was covered with a film (thickness of the dried film: 3 μm). Next, a hot water bath at 60°C was prepared, and the steam of the hot water bath was applied to the inner surface covered with the film of the obtained camera cover for 2 minutes in a state in which the distance between the water surface of the hot water bath and the inner surface thereof was maintained to 5 cm.

Further, as a comparative test, the steam was applied according to the same method to the inner surface of the housing replacement cover BKC-13L on which a film had not been formed using the coating solution.

As a result, fog occurred in the inner surface of the camera cover on which a film had not been formed. On the contrary, fog did not occur in the inner surface of the camera cover on which a film had been formed. Therefore, it was found that films (anti-fogging layers) exhibiting excellent anti-fogging properties were able to be formed in a case of using the coating solutions 1 to 27.

(Example 36)

[Application to automobile headlight lens]

The inner surface of a headlight lens for repairing W219 (manufactured by Office K) was coated with each of the anti-fogging coating compositions (coating solutions 1 to 27) using a spray gun (form: W-101-101G, Anest Iwata Corporation). Next, the applied coating solution was dried at 120°C for 20 minutes to obtain a headlight lens whose inner surface was covered with a film. Next, a hot water bath at 60°C was prepared, and the steam of the hot water bath was applied to the inner surface covered with the film of the obtained headlight lens for 2 minutes in a state in which the distance between the water surface of the hot water bath and the inner surface thereof was maintained to 5 cm.

Further, as a comparative test, the steam was applied according to the same method to the inner surface of the headlight lens on which a film had not been formed using the coating solution.

As a result, fog occurred in the inner surface of the headlight lens on which a film had not been formed. On the contrary, fog did not occur in the inner surface of the headlight lens on which a film had been formed. Therefore, it was found that films (anti-fogging layers) exhibiting excellent anti-fogging properties were able to be formed in a case of using the coating solutions 1 to 27.

(Example 37)

Each headlight lens whose inner surface of a headlight lens for repairing W219 (manufactured by Office K) was covered with a film was obtained in the same manner as in Example 36 except that the thickness of the dried film was set to 3 μm using each of the coating solutions 1 to 27. Next, a hot water bath at 60°C was prepared, and the steam of the hot water bath was applied to the inner surface covered with the film of the obtained headlight lens for 2 minutes in a state in which the distance between the water surface of the hot water bath and the inner surface thereof was maintained to 5 cm.

As a result, fog did not occur in the inner surface of the headlight lens on which a film had been formed. Therefore, it was found that films (anti-fogging layers) exhibiting excellent anti-fogging properties were able to be formed in a case of using the coating solutions 1 to 27.

(Example 38)

[Application to automobile tail light lens]

The inner surface of a lens cover of an LED tail light (product number; OET153) for Witz (manufactured by Motor Product Ltd.) was coated with each of the anti-fogging coating compositions (coating solutions 1 to 27) using a spray gun (form: W-101-101G, Anest Iwata Corporation). Next, the applied coating solution was dried at 80°C for 10 minutes to obtain a tail light lens whose inner surface was covered with a film (thickness of the dried film: 3 μm). Next, a hot water bath at 60°C was prepared, and the steam of the hot water bath was applied to the inner surface covered with the film of the obtained tail light lens for 2 minutes in a state in which the distance between the water surface of the hot water bath and the inner surface thereof was maintained to 5 cm.

Further, as a comparative test, the steam was applied according to the same method to the inner surface of the tail light lens on which a film had not been formed using the coating solution.

As a result, fog occurred in the inner surface of the tail light lens on which a film had not been formed. On the contrary, fog did not occur in the inner surface of the tail light lens on which a film had been formed. Therefore, it was found that films (anti-fogging layers) exhibiting excellent anti-fogging properties were able to be formed in a case of using the coating solutions 1 to 27.

The entirety of the disclosure of JP2016-239842 filed on December 9, 2016 is incorporated in the present specification by reference.

All documents, patent applications, and technical standards described in the present specification are incorporated herein by reference to the same extent as in a case of being specifically and individually noted that individual documents, patent applications, and technical standards are incorporated by reference.

**Claims**

1. A laminate comprising:

   a base material; and
   an anti-fogging layer provided on at least a part of the base material,
   wherein the anti-fogging layer contains a siloxane binder, silica particles, and a water absorption organic polymer,
   a water absorption amount of the anti-fogging layer is in a range of 1.5 $mg/cm^2$ to 25.0 mg/cm,
   a water contact angle of a surface of the anti-fogging layer is in a range of 1° to 20°, and
   a film thickness of the anti-fogging layer is more than 1 μm and 10 μm or less.

2. The laminate according to claim 1,
   wherein, in a case where a solid mass of the water absorption organic polymer in the anti-fogging layer is denoted as A and a solid mass of the silica particles in the anti-fogging layer is denoted as B, Relational Expression (A) is satisfied.

$$0.01 \leq A/B \leq 0.20 \text{ Relational Expression (A)}$$

3. The laminate according to claim 1 or 2,
   wherein an average primary particle diameter of the silica particles is in a range of 10 nm to 20 nm.

4. The laminate according to any one of claims 1 to 3,
   wherein the silica particles are chain-like silica particles.

5. The laminate according to any one of claims 1 to 4,
   wherein a content of the silica particles in the anti-fogging layer is in a range of 40% by mass to 70% by mass with respect to a total mass of the anti-fogging layer.

6. The laminate according to any one of claims 1 to 5,
   wherein a solubility parameter value of the water absorption organic polymer is 25.0 $MPa^{1/2}$ or more.

7. The laminate according to any one of claims 1 to 6,
   wherein the base material is a resin base material.

8. The laminate according to claim 7,
   wherein the resin base material is an acrylic resin base material or a polycarbonate base material.

9. An anti-fogging coating composition comprising:

   a hydrolyzate of a siloxane compound represented by Formula (1);
   silica particles; and
   a water absorption organic polymer,
   wherein, in a case where a solid mass of the water absorption organic polymer is set as A, a solid mass of the silica particles is set as B, and a solid weight of the hydrolyzate of the siloxane compound is set as C', Relational Expression (A) and Relational Expression (B') are satisfied,

$$0.01 \leq A/B \leq 0.20 \text{ Relational Expression (A)}$$

$$0.15 \leq C'/B \leq 2.00 \text{ Relational Expression (B')}$$

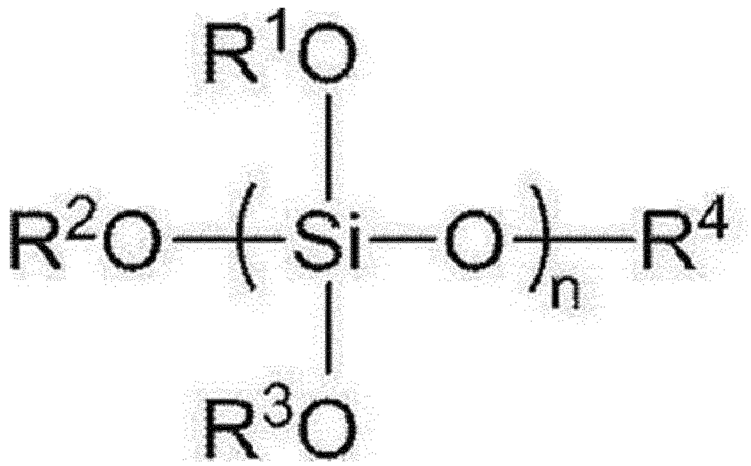

Formula (1)

in Formula (1), $R^1$, $R^2$, $R^3$, and $R^4$ each independently represent a monovalent organic group having 1 to 6 carbon atoms, and n represents an integer of 2 to 20.

**10.** The anti-fogging coating composition according to claim 9,
wherein an average primary particle diameter of the silica particles is in a range of 10 nm to 20 nm.

**11.** The anti-fogging coating composition according to claim 9 or 10,
wherein the silica particles are chain-like silica particles.

**12.** The anti-fogging coating composition according to any one of claims 9 to 11,
wherein a solubility parameter value of the water absorption organic polymer is 25.0 $MPa^{1/2}$ or more.

**13.** The anti-fogging coating composition according to any one of claims 9 to 12, further comprising:
an aluminum chelate compound.

**14.** The anti-fogging coating composition according to claim 13,
wherein a content of the aluminum chelate compound is in a range of 5% by mass to 20% by mass with respect to a total solid content of the anti-fogging coating composition.

**15.** The anti-fogging coating composition according to any one of claims 9 to 14, further comprising:
a ketone-based solvent.

**16.** The anti-fogging coating composition according to claim 15,
wherein a content of the ketone-based solvent is in a range of 1% by mass to 10% by mass with respect to a total mass of the anti-fogging coating composition.

**17.** The anti-fogging coating composition according to any one of claims 9 to 16,
wherein a content of the silica particles is in a range of 40% by mass to 70% by mass with respect to a total solid content of the anti-fogging coating composition.

**18.** The anti-fogging coating composition according to any one of claims 9 to 17, further comprising: water.

**19.** The anti-fogging coating composition according to claim 18,
wherein a content of water is in a range of 20% by mass to 60% by mass with respect to a total mass of the anti-fogging coating composition.

**20.** A method of producing a laminate comprising:

coating a base material with the anti-fogging coating composition according to any one of claims 9 to 19; and drying the composition.

FIG. 1

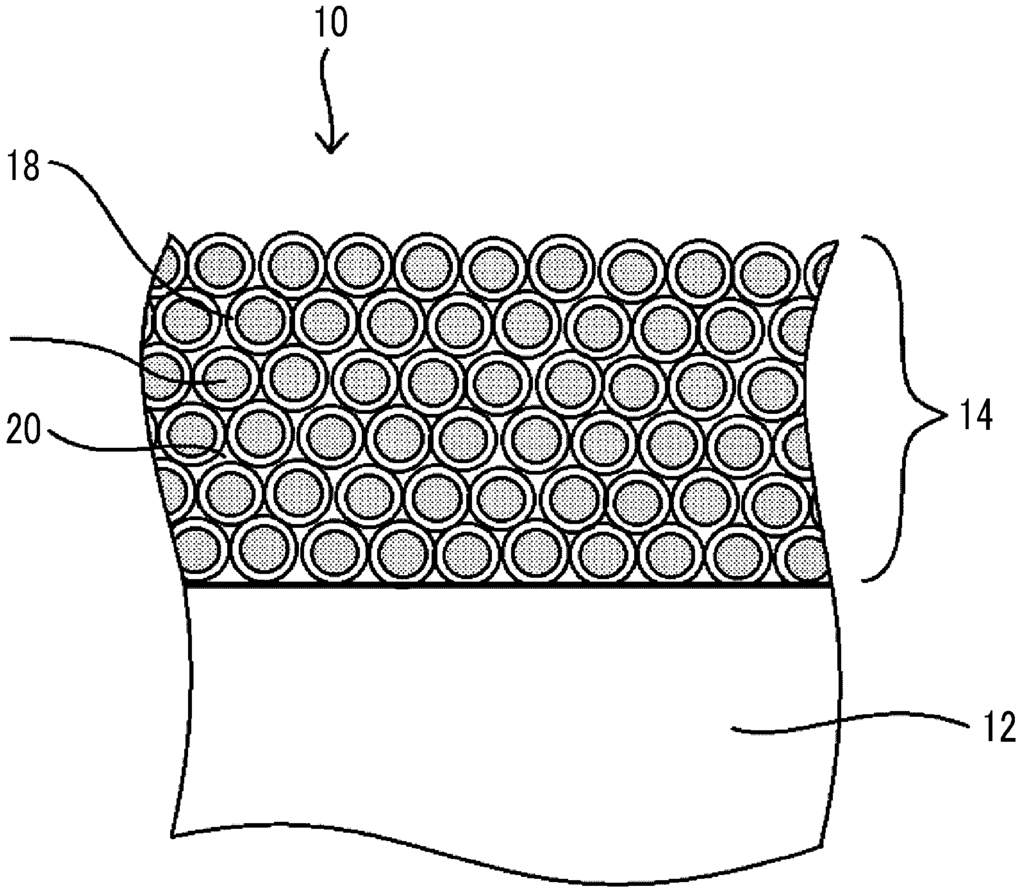

## INTERNATIONAL SEARCH REPORT

International application No.
PCT/JP2017/038819

**A. CLASSIFICATION OF SUBJECT MATTER**
Int. Cl. B32B27/00(2006.01)i, C09D7/40(2018.01)i, C09D183/04(2006.01)i

According to International Patent Classification (IPC) or to both national classification and IPC

**B. FIELDS SEARCHED**

Minimum documentation searched (classification system followed by classification symbols)
Int. Cl. B32B, C09D1/00-10/00, C09D101/00-201/10, C09K3/18, G02B1/10-1/18, H04N7/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>Y<br>A | JP 2012-170859 A (ASAHI KASEI E-MATERIALS CORP.) 10 September 2012, claims, paragraphs [0007]-[0010], [0023], [0025]-[0060], [0064], [0142], [0145]-[0148], [0151]-[0153], [0160]-[0161], [0164]-[0165], [0168], embodiments 3-5, paragraph [0196] (Family: none) | 9-10, 12-16, 18-20<br><br>11<br>1-8, 17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| | |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2017/038819

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2012/141150 A1 (ASAHI GLASS CO., LTD.) 18 October 2012, claims, paragraphs [0002]-[0004], [0015]-[0018], [0028], [0034]-[0038], [0050]-[0059], [0066]-[0081], [0087]-[0089], production example 3 ([0096]), examples 3 (paragraph [0101]), example 8 (paragraph [0102], table 1) & US 2014/0037935 A1, claims, paragraphs [0002]-[0007], [0017]-[0024], [0036], [0044]-[0050], [0063]-[0076], [0083]-[0110], [0117]-[0121], production example 3 (paragraph [0134]), example 3 (paragraph [0139]), example 8 (paragraph [0142], table 1) & EP 2698246 A1 & CN 103459139 A | 9, 13-14, 17-20<br>11<br>1-8, 10, 12 |
| Y | JP 2004-083846 A (MITSUBISHI CHEM CORP.) 18 March 2004, claims, paragraphs [0001]-[0004], [0007], [0014]-[0017] (Family: none) | 11 |
| Y | JP 2000-336347 A (KONISHI CO., LTD.) 05 December 2000, claims, paragraphs [0010]-[0011], [0020], [0023] (Family: none) | 11 |
| Y | JP 2003-064313 A (TOTO, LTD.) 05 March 2003, claims, paragraphs [0083]-[0089] (Family: none) | 11 |
| A | JP 2012-117025 A (NIPPON SHEET GLASS CO., LTD.) 21 June 2012 & US 2013/0302599 A1 & WO 2012/073685 A1 & EP 2647677 A1 | 1-20 |
| A | JP 2001-074902 A (NIKON CORP.) 23 March 2001 (Family: none) | 1-20 |
| A | JP 62-153147 A (TORAY INDUSTRIES, INC.) 08 July 1987 & CA 2007623 A | 1-20 |

Form PCT/ISA/210 (continuation of second sheet) (January 2015)

INTERNATIONAL SEARCH REPORT

International application No.
PCT/JP2017/038819

(Regarding the subject of the search)

The antifogging layer laminate of claim 1 encompasses any anti-fogging layer that contains a siloxane binder, silica particles, and a water-absorbent organic polymer and has the desired feature that the water absorption amount, water contact angle of the surface, and film thickness have the numerical values specified in claim 1.

However, what is disclosed within the meaning of PCT Article 5 as an antifogging layer satisfying the conditions of the water absorption amount, water contact angle of the surface, and film thickness is only an anti-fogging layer that satisfies both the relational expression (A) indicated in claim 2 and paragraph [0027] of the description and the relational expression (B) indicated in paragraph [0050] of the description; therefore, support is lacking within the meaning of PCT Article 6.

The same is true with regard to claims 2-8 directly or indirectly citing claim 1.

Therefore, the search regarding claims 1-8 was performed only on the scope disclosed with support by the description for which a meaningful search could be performed; more specifically, on the laminate having an anti-fogging layer satisfying the conditions of relational expression (A) and relational expression (B) which is specifically indicated in the description.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001254072 A
- JP 2016164265 A
- JP 2009054348 A
- JP 2016239842 A


### Non-patent literature cited in the description


- *NEW Glass, 98,* 2010, vol. 25 (3), 40-45
- POLYMER HANDBOOK FOURTH EDITION. John Wiley & Son, Inc,